# EUROPEAN PATENT SPECIFICATION

(11) **EP 3 384 992 B1**
(45) Date of publication and mention of the grant of the patent: **17.02.2021**
(21) Application number: 16905459.0
(22) Date of filing: 15.06.2016
(51) Int. Cl.: B03C 3/02, B03C 3/38, B03C 3/88, F01N 3/01, B03C 3/08, B03C 3/62

(54) **PARTICULATE MATTER COMBUSTION DEVICE**
FEINSTAUBVERBRENNUNGSVORRICHTUNG
DISPOSITIF DE COMBUSTION DE MATIÈRE PARTICULAIRE

(43) Date of publication of application: 10.10.2018
(73) Proprietor: Fuji Electric Co., Ltd., Kawasaki-shi Kanagawa 210-9530 (JP)
(72) Inventor: YAMASHIRO Keisuke, Kawasaki-shi, Kanagawa 210-9530 (JP); TAKANO Tetsumi, Kawasaki-shi, Kanagawa 210-9530 (JP)
(74) Representative: MERH-IP Matias Erny Reichl Hoffmann Patentanwälte PartG mbB
(86) International application number: PCT/JP2016/067782
(87) International publication number: WO 2017/216904

(56) References cited:
- WO-A1-2008/062554
- JP-A- 2005 320 895
- JP-A- 2008 119 618
- JP-A- 2012 170 869
- JP-A- 2016 107 173
- US-A1- 2008 047 434
- US-A1- 2010 072 055

## Description

### BACKGROUND

### 1. TECHNICAL FIELD

The present invention relates to particulate matter combustion apparatus.

Conventionally, a particulate matter (hereinafter, abbreviated to as 'PM') in an exhaust gas has been collected using a corona discharge (for example, see Patent Documents 1 and 2). Also, it has been known to utilize a high-frequency barrier discharge system so as to aggregate the PMs (for example, see Patent Document 3). It has been known that plasma is generated using a discharge electrode and a dielectric material in a flat plate shape, and the PMs are cleaned by that plasma (for example, see Patent Document 4). The document US2010 0702055A1 discloses a gas purifying device according to the preamble of the independent claim 1.

### [Prior Art Document]

### [Patent Document]

Patent Document 1: Japanese Patent Gazette No. 4931602
Patent Document 2: Japanese Patent Gazette No. 4823027
Patent Document 3: Japanese Patent Gazette No. 3702230
Patent Document 4: Japanese Patent Gazette No. 4564546

### SUMMAEY OF THE INVENTION

### PROBLEM TO BE SOLVED BY THE INVENTION

In the case where a charging unit that charges PMs is provided but not provided with a processing unit that processes the PMs, a PM collecting mechanism such as a blower is required. Since the PM collecting mechanism requires about twice the volume of the dust collection unit, there is a problem that the apparatus is enlarged. SUMMARY

To solve the problems, the features of the independent claim are suggested. In a first aspect, there is provided a particulate matter combustion apparatus comprising a dust collection unit and a combustion unit. The dust collection unit charges a particulate matter in a particulate matter containing gas by a first discharge mechanism to be collected. The combustion unit generates active oxygen by a second discharge mechanism different form the first discharge mechanism. The combustion unit reacts the active oxygen with the collected particulate matter.

The second discharge mechanism is a creeping corona discharge mechanism. The combustion unit : has a first dielectric material, a first creeping corona discharge electrode and a first grounded electrode. The first creeping corona discharge electrode is disposed on the lower surface side of the first dielectric material. An AC voltage is applied to the first creeping corona discharge electrode. The first grounded electrode is disposed on the upper surface side of the first dielectric material. The first grounded electrode has the ground potential. The first discharge mechanism is a corona discharge mechanism. The dust collection unit has the first grounded electrode and the first corona discharge electrode. The first corona discharge electrode is provided above the first grounded electrode to be spaced.

In the case where the first dielectric material is seen from a top view, a first side of the first dielectric material may be protruded at a more outer side from a second side of a flat surface region of the first creeping corona discharge electrode that is closest to the first side. The first creeping corona discharge electrode : has the flat surface region, an extension region and an extraction region. The extension region : is electrically connected to the flat surface region. In a different direction from a first direction that connects the first side to the second side at the shortest distance in a top view, the extension region extends outward from the second side. The extraction region : is electrically connected to the extension region. The extraction region : protrudes at a more outer side than the first side in the top view.

The direction extended by the extension region may form an acute angle with the second side.

The first grounded electrode may have a mesh shape. The particulate matter combustion apparatus may further comprise a fixing portion. The fixing portion may fix partially the first grounded electrode to the first dielectric material.

The particulate matter combustion apparatus may further comprise a collection box. The collection box may be disposed on the upper surface side of the first dielectric material. The collection box may have a plurality of openings in the upper surface opposed to the first dielectric material.

In a second aspect of the present invention, the first grounded electrode may have a plurality of individual electrodes. The plurality of individual electrodes may be provided to be spaced from each other, and electrically connected to each other with a wire.

Each of the plurality of individual electrodes may be disposed at a vertex position of an equilateral triangle having the same size.

Each of the plurality of individual electrodes may be provided to reach the upper surface of the collection box.

The particulate matter combustion apparatus may further comprise a vibration generating mechanism. The vibration generating mechanism may apply vibrations to the collection box.

In a third aspect of the present invention, the plurality of individual electrodes may include any of a plurality of parallel electrodes in a linear shape and a plurality of orthogonal electrodes in a linear shape. The plurality of parallel electrodes in a linear shape may be extended in a direction parallel to the flow of the particulate matter containing gas introduced into the particulate matter combustion apparatus. The plurality of orthogonal electrodes in a linear shape may be extended in a direction orthogonal to the flow of the particulate matter containing gas.

The plurality of individual electrodes may include a plurality of parallel electrodes and a plurality of orthogonal electrodes.

The first corona discharge electrode may have a plurality of protruding portions. The corona discharge region may be located immediately under the plurality of protruding portions. The density of the plurality of individual electrode in the corona discharge region may be higher than that of the plurality of individual electrode in a region other than the corona discharge region.

The temperature of the first dielectric material may be 300 degrees C or lower in a case where an AC voltage is applied to the first creeping corona discharge electrode.

In a fourth aspect of the present invention, the particulate matter combustion apparatus may further comprise a second dielectric material, a second grounded electrode and a second corona discharge electrode. The second dielectric may be disposed on the lower surface side of the first creeping corona discharge electrode. The second grounded electrode may be disposed on the lower surface side of the second dielectric material. The second grounded electrode may have the ground potential. The second corona discharge electrode may be provided below the second grounded electrode to be spaced.

In a fifth aspect of the present invention, the particulate matter combustion apparatus may further comprise a third dielectric material, a second creeping corona discharge electrode and a third grounded electrode. The third dielectric material may be disposed above the first corona discharge electrode to be spaced. The second creeping corona discharge electrode may be disposed on the upper surface side of the third dielectric material. An AC voltage may be applied to the second creeping corona discharge electrode. The third grounded electrode may be disposed on the lower surface side of the third dielectric material. The third grounded electrode may have the ground potential. A corona discharge may be generated between the first corona discharge electrode, the first grounded electrode and the third grounded electrode.

In a sixth aspect of the present invention, the particulate matter combustion apparatus may further comprise a third dielectric material, a second creeping corona discharge electrode, a third grounded electrode, a fourth dielectric material, a third creeping corona discharge electrode and a fourth grounded electrode. The third dielectric material may be disposed above the first corona discharge electrode to be spaced. The second creeping corona discharge electrode may be disposed on the upper surface side of the third dielectric material. An AC voltage may be applied to the second creeping corona discharge electrode. The third grounded electrode may be disposed on the lower surface side of the third dielectric material. The third grounded electrode may have the ground potential. The fourth dielectric material may be disposed below the second corona discharge electrode to be spaced. The third creeping corona discharge electrode may be disposed on the lower surface side of the fourth dielectric material. An AC voltage may be applied to the third creeping corona discharge electrode. The fourth grounded electrode may be disposed on the upper surface side of the fourth dielectric material. The fourth grounded electrode may have the ground potential. The corona discharge may be generated between the first corona discharge electrode, the first grounded electrode and the third grounded electrode. The corona discharge may be generated between the second corona discharge electrode, the second grounded electrode and the fourth grounded electrode. A creeping corona discharge may be generated between the first creeping corona discharge electrode, the first grounded electrode and the second grounded electrode. The creeping corona discharge may be generated between the second creeping corona discharge electrode and the third grounded electrode. The creeping corona discharge may be generated between the third creeping corona discharge electrode and the fourth grounded electrode.

Additionally, the summary clause does not necessarily describe all necessary features of the embodiments of the present invention. The present invention may also be a sub-combination of the features described above.

### BRIEF DESCRIPTION OF THE DRAWINGS

Fig. 1 is a perspective view of a PM combustion apparatus 100 in a first embodiment.
Fig. 2 is a drawing showing a cross-section A - A' in Fig. 1.
Figs. 3(a) to 3(c) are drawings showing a positional relationship between a first corona discharge electrode 50, a first dielectric material 20, a first grounded electrode 30 and a first creeping corona discharge electrode 10.
Figs. 4(a) to 4(c) are drawings illustrating creeping flashover.
Fig. 5 is a drawing showing a first modification example of the first embodiment.
Fig. 6 is a drawing showing a second modification example of the first embodiment.
Fig. 7 is a drawing showing a cross-section A - A' of the PM combustion apparatus 100 in a second embodiment.
Fig. 8 is a drawing showing a disposition of a plurality of individual electrodes 32 in the second embodiment.
Fig. 9 is a drawing showing a first modification example of the second embodiment.
Figs. 10(a) to 10(b) are drawings showing a state of applying vibrations to the first collection box 70 with a hammer 80.
Figs. 11(a) to 11(c) are drawings showing a second modification example of the second embodiment.
Fig. 12 is a drawing showing a third modification example of the second embodiment.
Fig. 13 is a drawing showing a disposition of a first grounded electrode 30 in a third embodiment.
Fig. 14 is a drawing showing a first modification example of the third embodiment.
Fig. 15 is a drawing showing a second modification example of the third embodiment.
Fig. 16 is a drawing showing a third modification example of the third embodiment.
Fig. 17 is a drawing showing a fourth modification example of the third embodiment.
Fig. 18 is a drawing showing a cross-section A - A' of a PM combustion apparatus 200 in a fourth embodiment.
Fig. 19 is a drawing showing a cross-section A - A' of the PM combustion apparatus 200 in a fifth embodiment.
Fig. 20 is a drawing showing a cross-section A - A' of a PM combustion apparatus 300 in a sixth embodiment.
Fig. 21 is a drawing showing a cross-section A - A' of a PM combustion apparatus 400 in a seventh embodiment.
Fig. 22 is a drawing showing a cross-section A - A' of a PM combustion apparatus 500 in an eighth embodiment.

### DESCRIPTION OF EXEMPLARY EMBODIMENTS

Hereinafter, embodiments of the present invention will be described. The embodiments do not limit the invention according to the claims, and all the combinations of the features described in the embodiment are not necessarily essential to means provided by aspects of the invention.

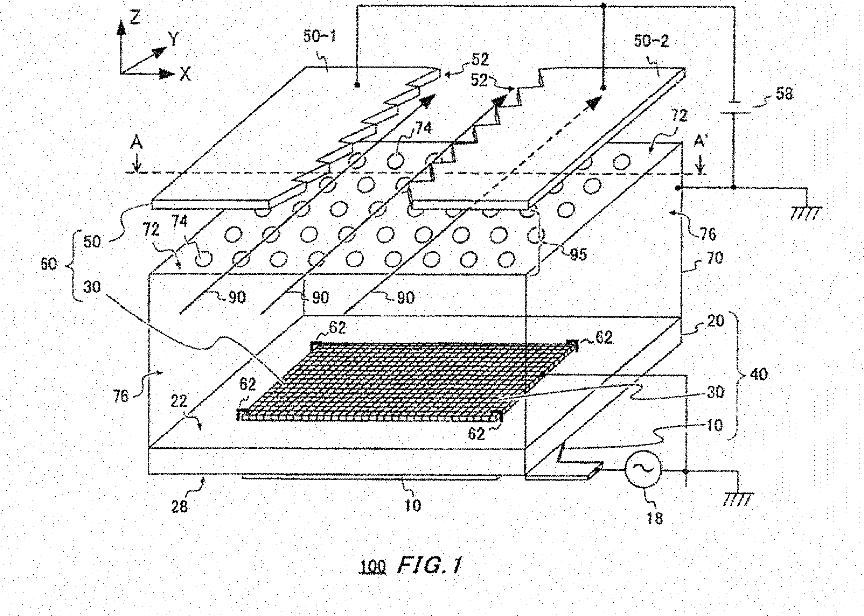

Fig. 1 is a perspective view of a PM combustion apparatus 100 in a first embodiment. The PM combustion apparatus may be read as a particulate matter combustion apparatus instead. The X-axis and Y-axis are axes orthogonal to each other, and the Z-axis is perpendicular to a X-Y axes plane. The X-axis, Y-axis and Z-axis form a so-called right-handed system. The X-axis, Y-axis and Z-axis are only to specify relative positions of components, and shall not limit them to specific directions. The Z-axis of the present example may not be parallel to a direction perpendicular to the ground surface. A direction parallel to the X-axis is denoted as X direction. In addition, an arrow direction of the X-axis is in particular denoted as the +X direction, and a direction opposite to that arrow direction is denoted as -X direction. The Y direction of the Y-axis and the Z direction of the Z-axis are described in a similar line.

The PM combustion apparatus 100 of the present example has a first dust collection unit 60. The first dust collection unit 60 has a function that PMs in a PM containing gas 90 are charged by a first discharge mechanism to collect the PMs. In the first discharge mechanism, a gas is subjected to a breakdown in such a manner that a potential difference of several kV is established in the gas. Note that 'k' is a SI prefix that means the cube of 10. In this way, the first discharge mechanism generates discharge plasma (that is, charged particles).

The first discharge mechanism may charge the PMs by impacting the charged particles with the PMs. The charged particles may have positive ions and negative ions such as electrons. The first discharge mechanism may be a glow discharge mechanism or a corona discharge mechanism. In the present example, the first discharge mechanism is the corona discharge.

The first dust collection unit 60 has a first grounded electrode 30 and a first corona discharge electrode 50. The first grounded electrode 30 is an electrode having a planar shape approximately parallel to the X-Y plane and having the ground potential (GND).

The first grounded electrode 30 may have a plurality of openings. The first grounded electrode 30 of the present example is an electrode having a mesh shape. The electrode having the mesh shape may be wire-woven electrode, an expand metal, a punching metal in which a metal flat plate is partially removed by punching, a braided metal or a woven metal. A mesh shape having a pitch of vertical : lateral = 1 : 2 becomes widespread as the mesh shape. The first grounded electrode 30 of the present example may have a mesh shape of vertical: lateral = 3 mm : 6 mm to 15 mm : 30 mm.

The first grounded electrode 30 is disposed on the upper surface 22 side of the first dielectric material 20. The first grounded electrode 30 of the present example is in contact with the first dielectric material 20. The first grounded electrode 30 may be partially fixed to the first dielectric material 20 by a fixing portion 62. The fixing portion 62 of the present example fixes four corners of the first grounded electrode 30 to the first dielectric material 20. Though the fixing portion 62 of the present example is a L-shaped metal fitting, the fixing portion 62 may also be a male screw. The fixing portion 62 may pass through a mesh opening in the vicinity of the edge portion of the first grounded electrode 30.

The first corona discharge electrode 50 is provided above the first grounded electrode 30 to be spaced. Note that in the present specification, 'above' or 'upper' means +Z direction of the Z-axis. Also, 'below' or 'lower' means -Z direction of the Z-axis. The first corona discharge electrode 50 is provided above a first collection box 70 disposed on the upper surface 22 side of the first dielectric material 20. A gap between the first corona discharge electrode 50 and the upper surface 72 of the first collection box 70 is a gas passing part 95 through which the PM containing gas 90 passes.

The first corona discharge electrode 50 has a planar shape approximately parallel to the X-Y plane. The first corona discharge electrode 50 has a plurality of protruding portions 52 that protrude in ±X direction on one side of the edge portion. A plurality of the protruding portions 52 may be provided along the Y direction. The protruding portion 52 of the present example corresponds to a vertex portion of a triangle. The protruding portion 52 is generally also referred to as 'spike portion.'

The first corona discharge electrode 50 of the present example has two first corona discharge electrodes 50 - 1 and 50 - 2 that are disposed in linear symmetry with respect to a straight line parallel to the Y-axis. The two first corona discharge electrodes 50-1 and 50-2 of the present example are disposed on one X-Y plane. The two first corona discharge electrodes 50-1 and 50-2 are disposed to be spaced from each other such that each other's protruding portions 52 are opposed.

The corona discharge of the present example is a DC corona discharge. That is, a high voltage of several kV is applied from a DC power supply 58 to the first corona discharge electrode 50 of the present example. In this way, a non-uniform electric field is formed around the protruding portion 52, and the corona discharge is generated in the gas passing part 95 located between the protruding portion 52 and the first grounded electrode 30.

In the present example, the PMs obtain electrons (e⁻) (i.e., negative ions) generated by the corona discharge. In this way, the PMs are negatively charged. The negatively charged PMs are drawn to the first grounded electrode 30 of the first collection box 70.

The PM combustion apparatus 100 of the present example comprises the first collection box 70. The first collection box 70 has a plurality of openings 74 in the upper surface 72 opposed to the first dielectric material 20. The first collection box 70 of the present example has the ground potential. The charged PMs go to the first grounded electrode 30 through the opening 74. Note that the first collection box 70 itself has the ground potential, while most of the charged PMs go to the first grounded electrode 30 through the opening 74 with riding on an ion wind. In this way, the first dust collection unit 60 can collect the PMs in the vicinity of the first grounded electrode 30.

The first collection box 70 of the present example has one upper surface 72 and four side surfaces 76. The first collection box 70 may be a metal box. Note that as an internal state of the first collection box 70 can be understood in Fig. 1, the upper surface 72 and four side surfaces 76 are shown by lines in a simple way. The first collection box 70 provides at its inside a space that has a wind velocity at a lower velocity than that of the PM containing gas 90. For example, in a case where the wind velocity of the PM containing gas 90 is 20 m/s, the wind velocity inside the first collection box 70 can be set to 1 m/s. By provision of the first collection box 70, the charged PMs can be prevented from being scattered with riding on the flow of the PM containing gas 90. In this way, the PMs can be stably collected.

Though the PM combustion apparatus 100 of the present example has the first collection box 70, in a case where the wind velocity of the PM containing gas 90 is a low velocity of about several m/s, the PM combustion apparatus 100 may not have the first collection box 70. In this way, the size of the PM combustion apparatus 100 can be even reduced as compared to the case having the first collection box 70.

The PM containing gas 90 has an oxygen concentration lower than that of air, and a carbon dioxide concentration higher than that of air. Also, the PM containing gas 90 has a higher temperature than a normal temperature. The PM containing gas 90 is, for example, an exhaust gas from an engine, having a temperature of about 270 degrees C.

An operation region (current-voltage characteristic region) that can generates stably the corona discharge to the PM containing gas 90 with the low oxygen concentration and the high carbon dioxide concentration, and at the high temperature is wider in a negative voltage than in a positive voltage. Therefore, the corona discharge can be more stably generated in a case where the negative voltage is applied to the first corona discharge electrode 50.

The PM containing gas 90 of the present example is introduced between the first corona discharge electrode 50 and the first collection box 70 in the +Y direction. In the present example, the plurality of protruding portions 52 in the first corona discharge electrode 50 are disposed along the +Y direction. In this way, as compared to the case where the plurality of protruding portions 52 are disposed along the X direction, a contact region between the PM containing gas 90 and the corona discharge can be increased.

The PM combustion apparatus 100 of the present example has a first combustion unit 40. The first combustion unit 40 of the present example has a function that reacts active oxygen, generated by a second discharge mechanism different from the first discharge mechanism, with PMs collected by the first dust collection unit 60. In the present example, the second discharge mechanism is a creeping corona discharge mechanism.

Note that in the present specification, the term "combustion" means that the active oxygen is reacted with the carbon in the PMs by the plasma generated by the creeping corona discharge, so that the carbon is oxidized. The active oxygen oxidizes solid carbon into gaseous carbon monoxide or carbon dioxide. In this way, the solid PMs are turned into the gas. The PMs turned into the gas are finally discharged to the outside of the PM combustion apparatus 100. Note that the 'combustion' in the present specification does not necessarily mean a matter involving generation of light and heat.

Also, in the present specification, the 'active oxygen' means the oxygen that oxidizes carbon. The active oxygen of the present example corresponds to ozone (O₃) and oxygen atoms (O) generated by the creeping corona discharge. Note that the active oxygen may be a free radical. Also, the active oxygen may contain one or more kinds of a singlet oxygen (¹O₂) and an oxygen ion (O₂⁻).

The first combustion unit 40 has the first dielectric material 20, a first creeping corona discharge electrode 10 and the first grounded electrode 30. Note that the first combustion unit 40 and the first dust collection unit 60 share the first grounded electrode 30. In the present example, since the first combustion unit 40 and the first dust collection unit 60 are integrally formed to be overlapped with each other in the Z direction, the size of the PM combustion apparatus 100 can be reduced as compared to a case where the first combustion unit 40 and the first dust collection unit 60 are not overlapped in the Z direction. Note that the first combustion unit 40 and the first dust collection unit 60 may be integrally formed to be overlapped with each other in the X direction, and may be integrally formed to be overlapped with each other in the Y direction.

Of course, in the present example, the size of the PM combustion apparatus 100 can be reduced as compared to a case where the PM collecting mechanism such as the blower is provided. In one example, in a case where the blower has a volume of about twice that of the PM combustion apparatus 100, when the blower is omitted, the size of the PM combustion apparatus 100 can be made one third as compared to a case where the blower exists. Note that in a case where the blower is used, maintenance needs to be periodically made to take out the collected PMs. However, in the present example, since the PMs are combusted and discharged to the outside, there is also an advantage in that maintenance for the blower itself is unnecessary.

The first creeping corona discharge electrode 10 is disposed on the lower surface 28 side of the first dielectric material 20. The first creeping corona discharge electrode 10 of the present example is located under the first dielectric material 20 to be in contact with the first dielectric material 20. An AC voltage from an AC power supply 18 is applied to the first creeping corona discharge electrode 10. In this way, the creeping corona discharge is generated in the vicinity of the first grounded electrode 30.

The first creeping corona discharge electrode 10 may be formed of a metal of a copper-tungsten alloy, and a silver-tungsten alloy and the like. Note that the material of the first creeping corona discharge electrode 10 is not limited to these. In light of easy processability, the first creeping corona discharge electrode 10 may have a thickness of 1 mm or less.

The first dielectric material 20 may be made of an inorganic dielectric material such as aluminum, aluminum nitride or silicon nitride. The first dielectric material 20 may be made of ceramics, and may be made of, more specifically, micarex. Note that the micarex is also referred to as 'mica-based Machinable Ceramics.' The first dielectric material 20 may have a thickness of 0.3 mm or more but less than 10 mm in order to avoid an occurrence of breakdown described below.

The AC power supply 18 of the present example is a high-frequency power supply from several kHz to several tens kHz. Therefore, the first dielectric material 20 is heated by high frequency induction to be raised in temperature. The first creeping corona discharge electrode 10 and the first dielectric material 20 are different in material, and thus different in thermal expansion coefficient. Note that the first creeping corona discharge electrode 10 of the present example is not embedded inside the first dielectric material 20. Therefore, even if the first creeping corona discharge electrode 10 and the first dielectric material 20 are thermally expanded, the first dielectric material 20 is not deformed or broken due to a difference in thermal expansion coefficient between the two. In such a point, the present example is more advantageous than a case where the first creeping corona discharge electrode 10 is embedded into the first dielectric material 20.

Note that the combustion of the PMs is not made by heat of the first creeping corona discharge electrode 10, but made by a reaction of the active oxygen and the carbon in the PMs by the plasma generated by the creeping corona discharge. Therefore, a temperature of the first dielectric material 20 may be the same level as that of the PM containing gas 90. For example, in a case where an AC voltage is applied to the first creeping corona discharge electrode 10, the temperature of the first dielectric material 20 is 300 degrees C or lower. When the temperature of the PM containing gas 90 is 270 degrees C, the temperature of the first dielectric material 20 may also be 270 degrees C. In this respect, the present example is different from a technology in which the first creeping corona discharge electrode 10 is formed with a nichrome wire to heat the first creeping corona discharge electrode 10 itself. Since the first creeping corona discharge electrode 10 has a lower temperature as compared to the case that the first creeping corona discharge electrode 10 itself is heated, the first creeping corona discharge electrode 10 of the present example has a higher durability than the heated case.

Since in the present example, the PMs are collected on the first grounded electrode 30, not on the first creeping corona discharge electrode 10, there is an advantage in miniaturization of an apparatus size. If the first grounded electrode 30 is disposed under the first dielectric material 20, the first creeping corona discharge electrode 10 will be located over the first dielectric material 20. In this case, since a distance between the first creeping corona discharge electrode 10 and the first collection box 70 having the ground potential needs to be sufficiently set so as to ensure a withstand voltage, the size of the PM combustion apparatus 100 becomes large. On the other hand, in the present example, the first creeping corona discharge electrode 10 to be applied by a high voltage is disposed under the first dielectric material 20. Accordingly, the size of the PM combustion apparatus 100 can be reduced as compared to the case where the first grounded electrode 30 is disposed under the first dielectric material 20.

Further, in the present example, since the PMs are not collected on the first creeping corona discharge electrode 10, a contamination countermeasure mechanism that prevents the first creeping corona discharge electrode 10 from contamination of the PMs is unnecessary. If the PMs are collected on the first creeping corona discharge electrode 10, a terminal part (bushing) that introduces a high voltage into the first creeping corona discharge electrode 10 needs to be air-purged. Since in the present example, the contamination countermeasure mechanism is unnecessary, there is an advantage in miniaturization and cost reduction of the PM combustion apparatus 100.

Fig. 1 shows the PM combustion apparatus 100 including each of the first combustion unit 40, the first dust collection unit 60 and the first collection box 70. Note that the PM combustion apparatus 100 may have a plurality of the combustion units, the dust collection units and the collection boxes. When the apparatus includes the plurality of the combustion units, the dust collection units and the collection boxes, a cross-section A-A' means a cross-sectional view in which the PM combustion apparatus is cut in parallel to an X-Z plane.

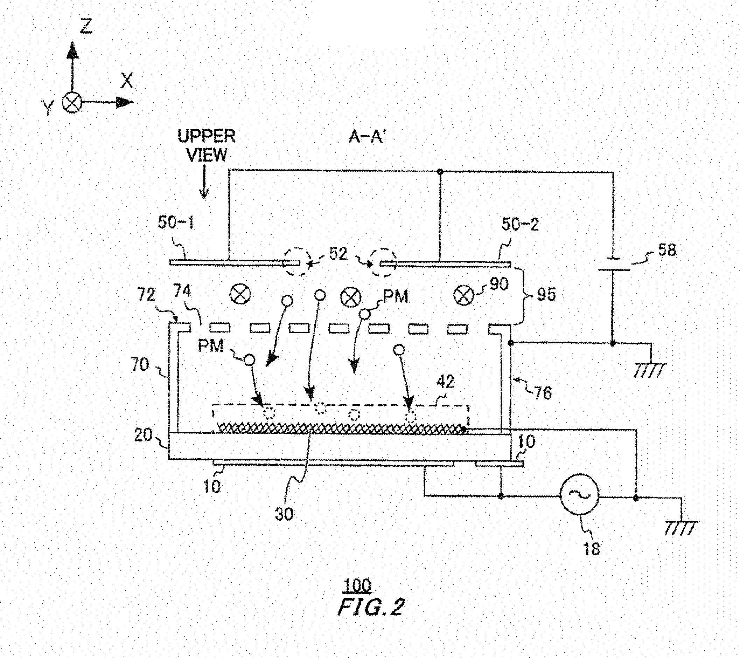

Fig. 2 is a drawing showing a cross-section A-A' in Fig. 1. A creeping corona discharge region 42 to be formed on the first grounded electrode 30 is shown by a dotted line. Note that in light of comprehensibility in the drawing, the creeping corona discharge region 42 is omitted in Fig. 1. Note that the foregoing active oxygen exists in the creeping corona discharge region 42. The PMs that travel from the gas passing part 95 to the first grounded electrode 30 via the opening 74 are shown by a circle in a solid line, and the PMs after combustion are shown by a circle in a dotted line.

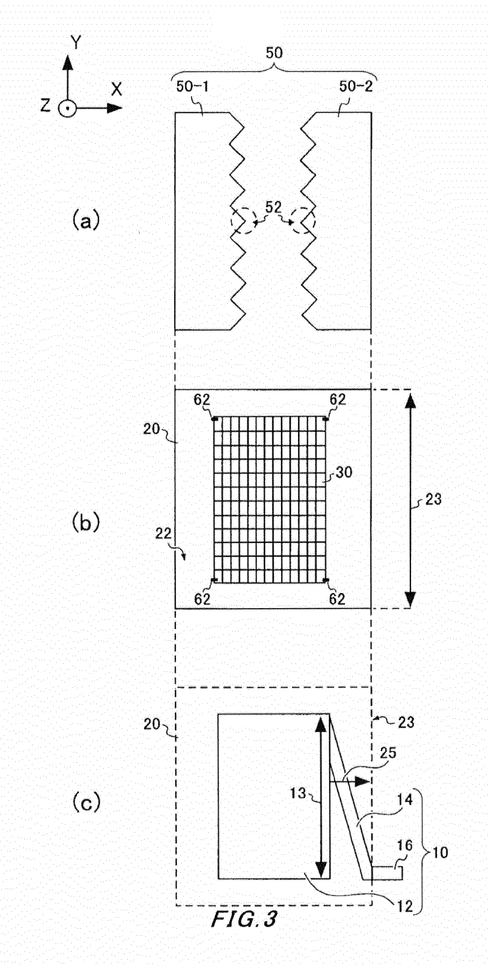

Figs. 3(a) to 3(c) are drawings showing a positional relationship between a first corona discharge electrode 50, a first dielectric material 20, a first grounded electrode 30 and a first creeping corona discharge electrode 10. Fig. 3(a) shows a drawing in a top view of the first corona discharge electrode 50. Fig. 3(b) shows a drawing in a top view of the first dielectric material 20 and the first grounded electrode 30. Fig. 3(c) shows a drawing in a top view of the first creeping corona discharge electrode 10. The top view means a case where an object is viewed in a -Z direction (see Fig. 2).

As shown in Figs. 3(a) and 3(b), the first corona discharge electrodes 50-1 and 50-2 correspond to the first dielectric material 20 at the edge portions in the X direction and the Y direction. Also, as shown in Fig. 3(b), the edge portion of the first grounded electrode 30 is located at a more inner side than that of the first dielectric material 20. In the present example, in a case where the first dielectric material 20 is seen from the top, the edge portion in the +X direction of the first dielectric material 20 is denoted as the first side 23.

As shown in Fig. 3(c), the first creeping corona discharge electrode 10 has a flat surface region 12, an extension region 14 and an extraction region 16. In the present example, the surfaces of the flat surface region 12 and the first grounded electrode 30 opposed to each other across the first dielectric material 20 have almost the same area, and are nearly completely overlapped with each other in the Z direction.

In the present example, among the edge portions of the flat surface region 12, the edge portion closest to the first side 23 of the first dielectric material 20 is denoted as a second side 13. The first side 23 of the first dielectric material 20 is protruded at a more outer side than a second side 13 of the flat surface region 12. In Fig. 3(c), a position to which the first side 23 of the first dielectric material 20 corresponds is shown when seen from the top. In the present example, the first side 23 of the first dielectric material 20 in the top view means the first side 23 projected to the X-Y plane that is the same as that of the first creeping corona discharge electrode 10.

The extension region 14 is electrically connected to the flat surface region 12. The extension region 14 is located on the same X-Y plane as that of the flat surface region 12. In a direction different from a first direction 25 to connect the first side 23 of the flat surface region 12 to the second side 13 of the first dielectric material 20 at the shortest distance in a top view, the extension region 14 extends outward from the second side 13 of the flat surface region 12. In the present example, the first direction 25 coincides with the +X direction. The extension region 14 of the present example extends obliquely from the edge portion of the second side 13 in the +Y direction to the edge portion (dotted line position in Fig. 3(c)) of the first side 23 in the -Y direction. In this way, the direction extended by the extension region 14 forms an acute angle with the second side 13.

Since the flat surface region 12 of the present example is rectangular, the second side 13 is a straight line parallel to the Y direction. Note that in another example, the second side 13 may not be parallel to the Y direction. For example, the flat surface region 12 may be trapezoidal, and in this case, the second side 13 is not parallel to the Y direction. Therefore, the first direction 25 that connects the first side 23 to the second side 13 at the shortest distance may be a direction different from the +X direction. Note that also in this case, the direction extended by the extension region 14 forms an acute angle with the second side 13.

Further, in another example, the second side 13 may have a curve. In this case, the first direction 25 that connects the first side 23 to the second side 13 at the shortest distance may be a direction different from the +X direction. The extension region 14 may extend in a direction different from a direction perpendicular to a tangent at a connection point with the flat surface region 12. Note that also in this case, the direction extended by the extension region 14 forms an acute angle with the second side 13.

The extraction region 16 of the present example is electrically connected to the extension region 14. The extraction region 16 is protruded at a more outer side than the first side 23 of the first dielectric material 20 in a top view. The extraction region 16 that protrudes at a more outer side than the first side 23 is electrically connected to the AC power supply 18.

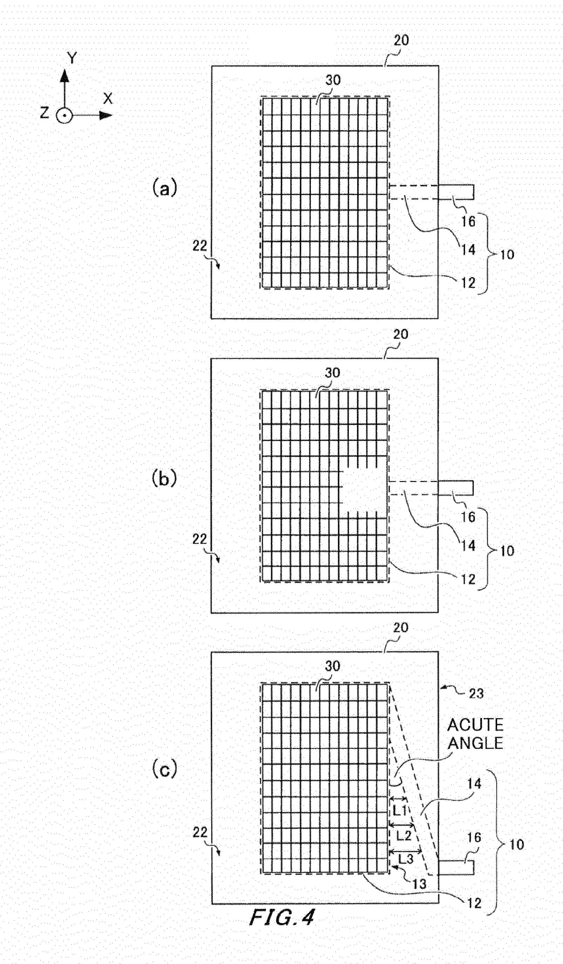

Figs. 4(a) to 4(c) are drawings illustrating creeping flashover. Fig. 4(a) is a drawing showing a case where a creepage distance from the first grounded electrode 30 to the extraction region 16 is the shortest one. The extension region 14 serves as a back electrode with respect to the upper surface 22 of the first dielectric material 20 since it is located under the first dielectric material 20. Since a high voltage is applied from the AC power supply 18 to the extraction region 16, a region of the upper surface 22 located above the extension region 14 is stronger in electric field strength as compared to a region of the upper surface 22 without the back electrode. Therefore, creeping flashover in the first dielectric material 20 is subject to be generated. In this way, the breakdown of the first dielectric material 20 can be generated along the upper surface 22 above the extension region 14.

Fig. 4(b) is a drawing showing a case where a creepage distance is made longer than that of Fig. 4(a) by removing a part of the first grounded electrode 30. However, in the example of Fig 4(b), since an installation area of the first grounded electrode 30 is smaller than that in the example of Fig 4(a), there is a problem such that the creeping corona discharge region 42 is reduced.

Fig. 4(c) is a drawing showing an extraction region 16 of the present example. The present example is the same as that of Fig. 3(c), and the direction extended by the extension region 14 forms an acute angle with the second side 13. Therefore, the creepage distance from the first grounded electrode 30 to the extraction region 16 can be made longer than that in the examples of Figs. 4(a) and 4(b). In this way, the breakdown of the first dielectric material 20 due to the back electrode can be prevented. In addition, as the example of Fig. 4(b), there is also no problem of the creeping corona discharge region 42 being reduced.

In the present example, a length from the edge portion (equal to the second side 13 in the X-Y plane) on the extension region 14 side of the first grounded electrode 30 to the edge portion on the first side 23 side of the extension region 14 is denoted as a distance L. In the present example, as the extension region 14 comes closer to the extraction region 16, the distance L becomes gradually longer. In Fig. 4(c), the distance L satisfies a relationship: distance L1 < distance L2 < distance L3.

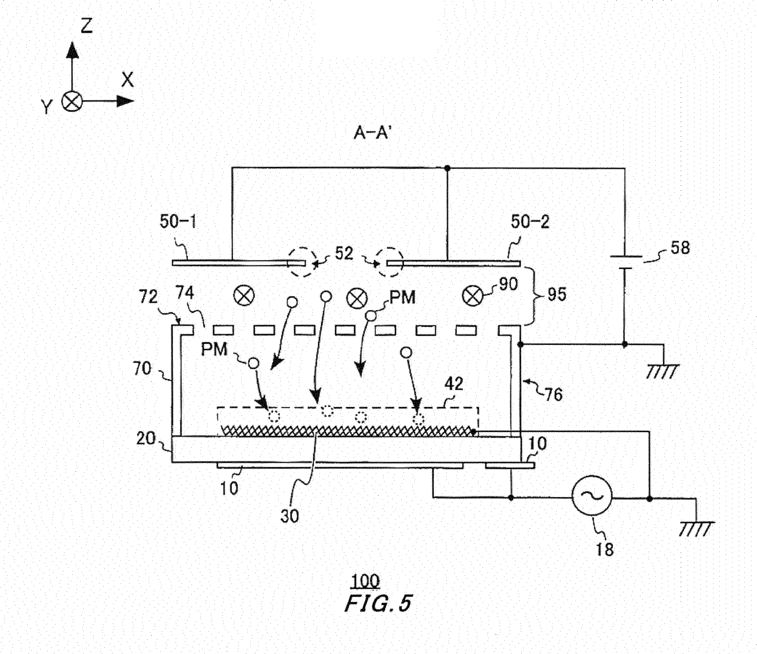

Fig. 5 is a drawing showing a first modification example of the first embodiment. In the present example, a DC power supply 58 applies a positive voltage to the first corona discharge electrode 50. The present example is different from the first embodiment in these points, but is the same as the first embodiment in other points. As described above, since the current-voltage characteristic region is wider in a case where a negative voltage is applied to the first corona discharge electrode 50, there is an advantage. However, even if a positive voltage is applied to the first corona discharge electrode 50, there are some cases where in a predetermined current-voltage characteristic region, the corona discharge can be stably generated.

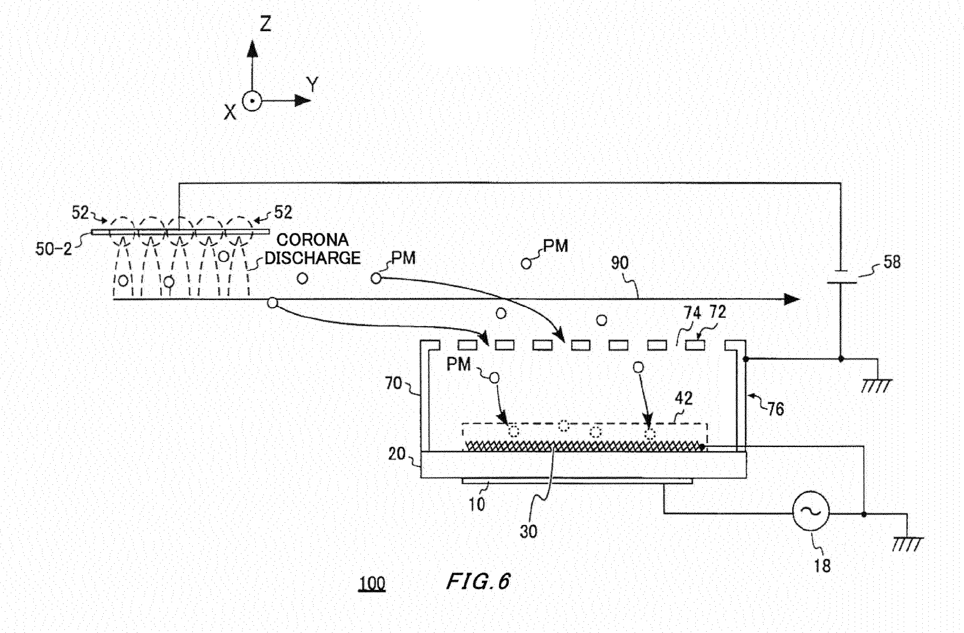

Fig. 6 is a drawing showing a second modification example of the first embodiment. In Fig. 6, a cross-section in a Y-Z plane of the PM combustion apparatus 100 is shown. In the present example, the first corona discharge electrode 50 is provided on the upstream side of the PM containing gas 90, and the first collection box 70 and the first combustion unit 40 are provided on the downstream side of the PM containing gas 90. The present example is different from the first embodiment in these points, but is the same as the first embodiment in other points. Also in the present example, the PMs charged by the corona discharge pass through the opening 74 of the first collection box 70 to reach the creeping corona discharge region 42.

Since in the present example, the first combustion unit 40 and the first dust collection unit 60 are provided to be separated from each other, the size of the PM combustion apparatus 100 is larger than that of the first embodiment. Note that the size of the PM combustion apparatus 100 can be reduced as compared to a case where the PM collecting mechanism such as the blower is provided. Note that the second modification example may be of course combined with the first modification example.

As a third modification example of the first embodiment, the first combustion unit 40 may be operated intermittently, not continuously. In the present example, a formation start timing of the creeping corona discharge region 42 is controlled according to an accumulation amount of the PMs. That is, in the present example, the first dust collection unit 60 is always in operation, so that the PMs are accumulated to form a predetermined shape; thereafter, the first combustion unit 40 is operated. In this way, as compared to a case where the first combustion unit 40 is always operated, power consumption of the PM combustion apparatus can be reduced. The PM combustion apparatus 100 may have a control unit, and this control unit may control the operations of the first combustion unit 40 and the first dust collection unit 60.

In addition to the formation start timing of the creeping corona discharge region 42, the control unit may control a time length for which the creeping corona discharge region 42 is formed. That is, the control unit may control a duty ratio that corresponds to presence or absence of the creeping corona discharge region 42. The control unit may control that duty ratio according to a deposition rate of the PMs. For example, a control unit makes longer a time for which the creeping corona discharge region 42 is formed when the deposition rate of the PMs is higher than a predetermined value, while the control unit makes shorter a time for which the creeping corona discharge region 42 is formed when the deposition rate of the PMs is lower than the predetermined value. In this way, the PM combustion apparatus can be operated further efficiently.

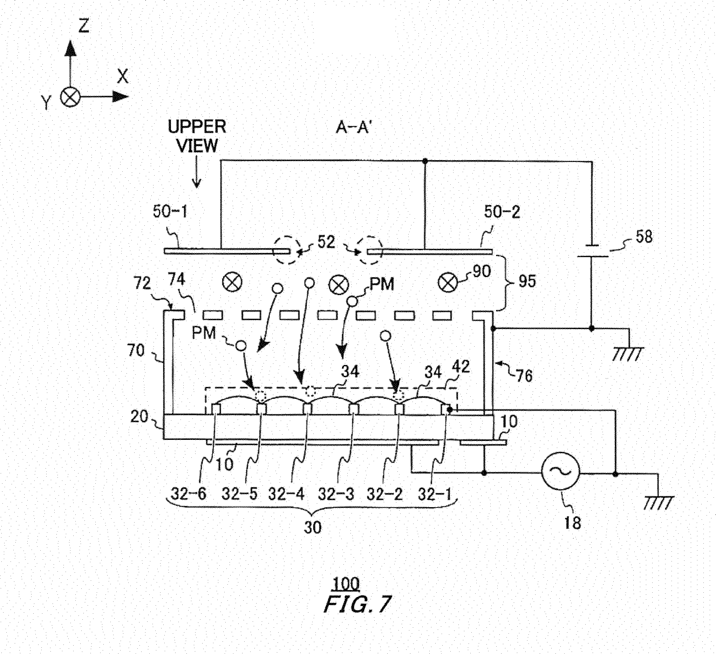

Fig. 7 is a drawing showing a cross-section A - A' of a PM combustion apparatus 100 in a second embodiment. The first grounded electrode 30 of the present example has a plurality of individual electrodes 32. The plurality of individual electrode 32 may be brazed on the upper surface 22 of the first dielectric material 20. Note that the plurality of individual electrodes 32 are electrically connected to each other with a wire 34. The wire 34 of the present example is located on the plurality of individual electrode 32. The wire 34 may be made of aluminum and the like as a principal component. The wire 34 can be ignored in electricity.

The plurality of individual electrodes 32 have the ground potential via the wire 34. The present example is different from the first embodiment in these points, but is the same as the first embodiment in other points. Therefore, the present example may be combined with the first embodiment and its modification example.

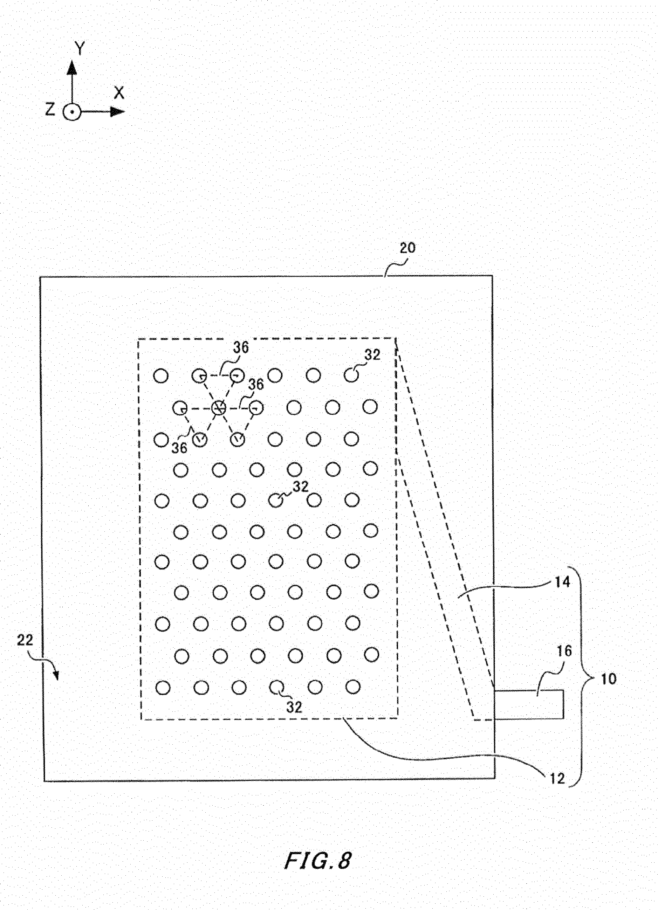

Fig. 8 is a drawing showing a disposition of the plurality of individual electrodes 32 in the second embodiment. Note that in light of comprehensibility in the drawing, the wire 34 will be omitted in Fig. 8. In the present example, each of the plurality of individual electrodes 32 has a columnar shape. The plurality of individual electrode 32 are provided spaced from each other. That is, the plurality of individual electrodes 32 themselves do not form a closed region only by the individual electrode 32 coupled with each other. Note that the plurality of individual electrodes 32 have the ground potential by connection of the wire 34.

As the first embodiment, in a case where the first grounded electrode 30 is an electrode with a mesh shape, there are some cases where residual PMs without combustion are produced at a central portion of openings in the mesh shape. That is, there are some cases where uneven combustion for the PMs occurs. This cause is considered as follows: since the central portion of the openings in the mesh shape is farthest from four sides of a rectangle constituting the openings, an electric field at the central portion is weaker as compared to that at a wiring portion constituting a mesh, so that the creeping corona discharge is hard to be generated.

Here, in the present example, distances between any two individual electrodes 32 adjacent to each other are equalized. In the present example, each of the plurality of individual electrodes 32 is disposed at vertex positions of equilateral triangles 36 having the same size. A length of one side of the equilateral triangle 36 may be equal to or more than 3 mm and equal to or less than 15 mm. The electric field spreads from the individual electrode 32 radially. Therefore, in a case where one side of a quadrangle in the mesh shape has the same length as one side of the equilateral triangle 36, the electric field at the central portion of the equilateral triangle 36 can be made stronger than that at the central portion of the quadrangle. Thus, the disposition of the individual electrodes 32 in the present example can reduce the uneven combustion for the PMs as compared to the first embodiment.

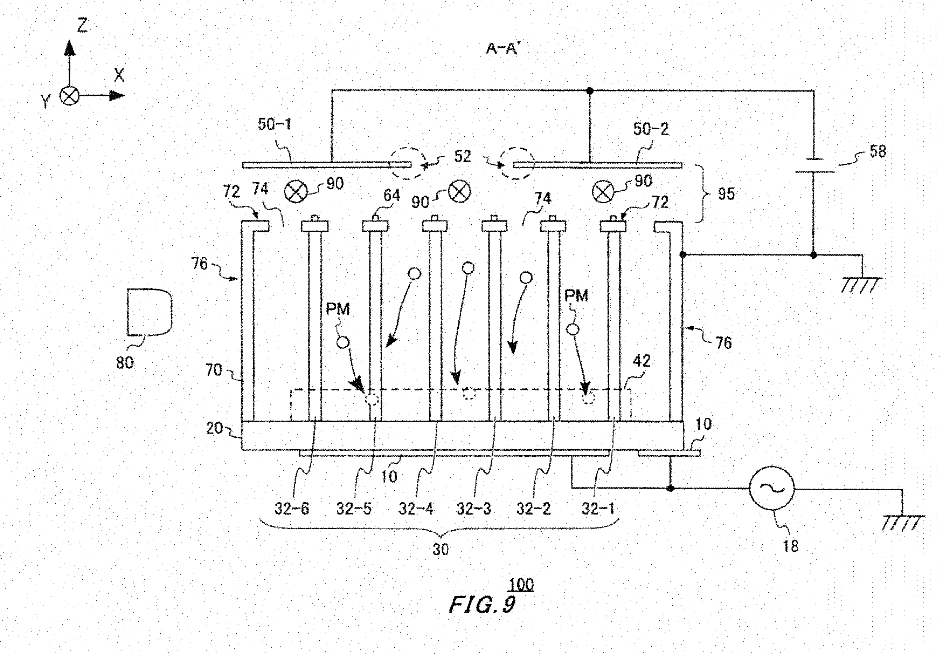

Fig. 9 is a drawing showing a first modification example of the second embodiment. In the present example, each of the plurality of individual electrodes 32 is provided to reach from the upper surface 22 of the first dielectric material 20 to the upper surface 72 of the first collection box 70. The individual electrode 32 of the present example has a columnar shape longer in the Z direction than that of the second embodiment. The individual electrode 32 of the present example may not be brazed to the first dielectric material 20. Each of the plurality of individual electrodes 32 are physically fixed to the upper surface 72 by a fixing portion 64. The fixing portion 64 may be a male screw. Therefore, the individual electrode 32 of the present example has the ground potential by being in physical contact with the first collection box 70. Therefore, when in the present example, the first collection box 70 is disposed on the first dielectric material 20, the plurality of individual electrodes 32 can be disposed on the first dielectric material 20. The present example is different from the second embodiment in these points, but is the same as the second embodiment in other points.

In the present example, the PMs are also accumulated in the vicinity of the upper surface 72 of the first collection box 70. Since the creeping corona discharge region 42 is formed in the vicinity of the upper surface 22 of the first dielectric material 20, the PMs accumulated in the vicinity of the upper surface 72 of the first collection box 70 is hard to be combusted. The PM combustion apparatus 100 of the present example may be further provided with a hammer 80 as a vibration generating mechanism that applies vibrations to the first collection box 70. The vibration generating mechanism has a function that moves the PMs adhering to the first collection box 70 to the upper surface 22 of the first dielectric material 20 by applying vibrations to the first collection box 70. The PMs adhering to the first collection box 70 may mean the PMs adhering to an inner side and an outer side of the side surface 76, and the upper surface 72 in the first collection box 70, as well as to the individual electrodes 32 therein. In a range where that function can be exerted, the vibration generating mechanism is not limited to the hammer 80, but another alternative means may be used.

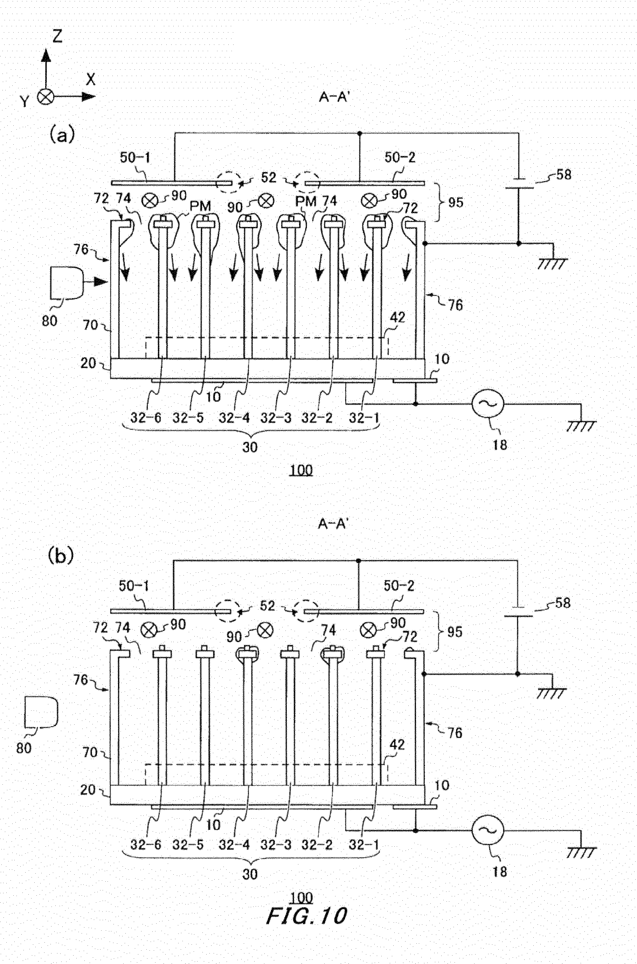

Figs. 10(a) to 10(b) are drawings showing a state of applying vibrations to the first collection box 70 with a hammer 80. Fig. 10(a) is a drawing showing a state that moves the PMs accumulated in the vicinity of the upper surface 72 of the first collection box 70 to the upper surface 22 of the first dielectric material 20 by applying vibrations to the first collection box 70. Fig. 10(b) is a drawing showing a state that the PMs moved to the upper surface 22 of the first dielectric material 20 are combusted. Note that the vibration generating mechanism of the present example may be of course applied to the whole embodiments described above and the whole embodiments described below, as well as these modification examples.

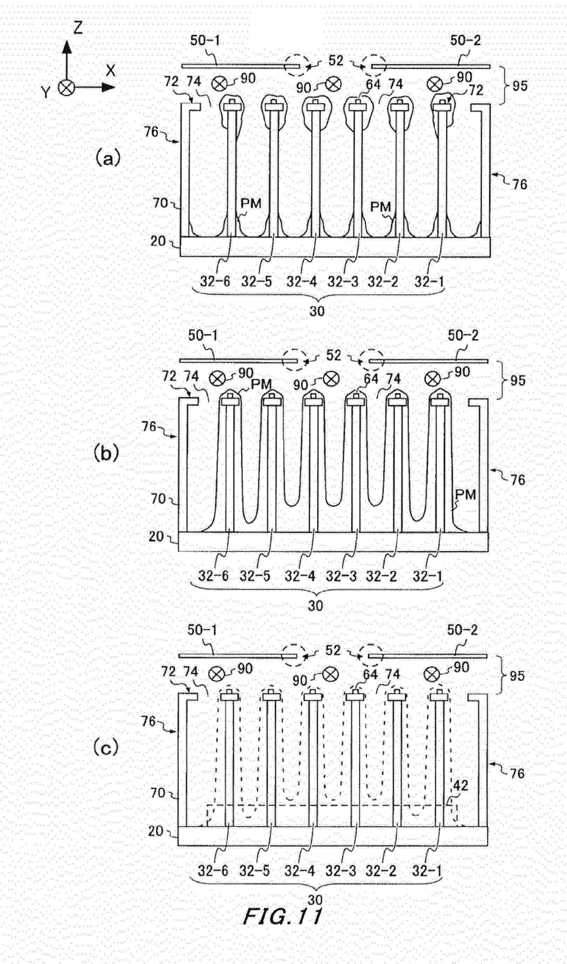

Figs. 11(a) to 11(c) are drawings showing a second modification example of the second embodiment. Note that in light of comprehensibility in the drawing, these are shown by omitting the AC power supply 18, the DC power supply 58 and the first creeping corona discharge electrode 10. In the present example, similarly to the third modification example of the first embodiment, the first combustion unit 40 is intermittently operated, not continuously operated. In the present example, the first dust collection unit 60 is always in operation, so that the PMs are accumulated to form a predetermined shape; thereafter, the first combustion unit 40 is operated. That is, in the present example, any or both of a formation timing of the creeping corona discharge region 42 and a duty ratio thereof are controlled.

Fig. 11(a) is a drawing showing an initial state where the PMs are accumulated in the vicinity of the upper surface 72 of the first collection box 70 and in the vicinity of the upper surface 22 of the first dielectric material 20. Fig. 11(b) is a drawing showing a state at a later time than Fig. 11(a). In Fig. 11(b), the accumulation of the PMs is advanced, so that the PMs accumulated in the vicinity of the upper surface 72 of the first collection box 70 are connected and united to the PMs accumulated in the vicinity of the upper surface 22 of the first dielectric material 20.

Fig. 11(c) is a drawing showing a state at a later time than Fig. 11(b). In Fig. 11(c), a first creeping corona discharge region 42 is formed in the vicinity of the upper surface 22 of the first dielectric material 20 by applying the voltage of the AC power supply 18 to the first creeping corona discharge electrode 10. In this way, the combustion of the PMs in the vicinity of the upper surface 22 of the first dielectric material 20 are gradually diffused upward, and the PMs accumulated in the vicinity of the upper surface 72 of the first collection box 70 are also combusted. In Fig. 11(c), the combusted PMs are shown by a dotted line. In the present example, the PMs accumulated on the upper surface 72 of the first collection box 70 can be surely combusted.

According to a voltage to the first corona discharge electrode 50 and a flow rate per unit time (m³/sec) of the PM containing gas 90, the PM combustion apparatus 100 of the present example may have a time table showing a time in which the PMs accumulated in the vicinity of the upper surface 72 of the first collection box 70 are connected and united to the PMs accumulated in the vicinity of the upper surface 22 of the first dielectric material 20. The PM combustion apparatus 100 may form the creeping corona discharge region 42 at a predetermined time corresponding to the foregoing voltage and flow rate. A series of steps in Figs. 11(a), (b) and (c) may be repeatedly carried out. The PM combustion apparatus 100 may have a control unit, and this control unit may control a timing that forms intermittently the creeping corona discharge region 42.

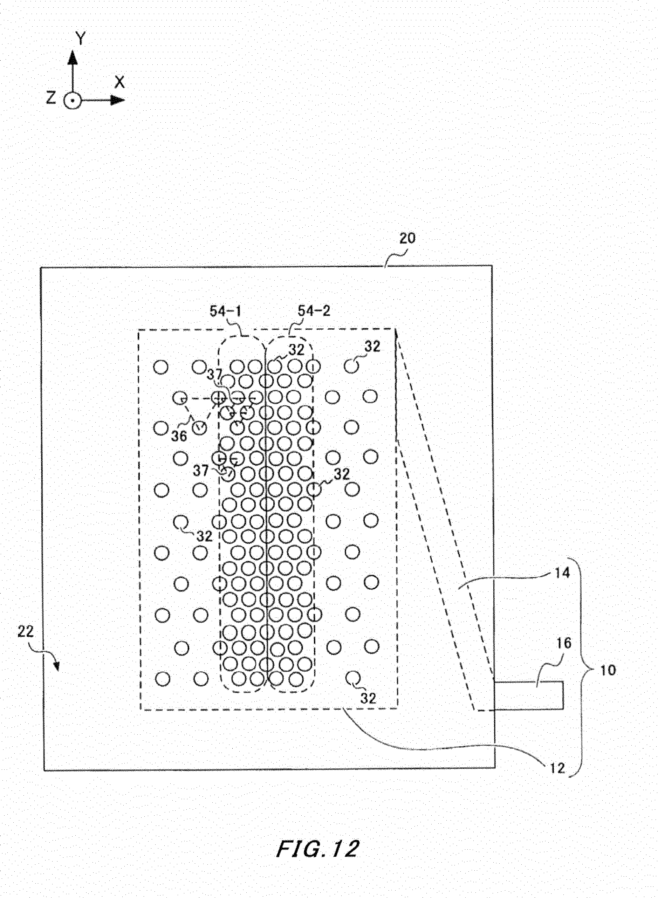

Fig. 12 is a drawing showing a third modification example of the second embodiment. Note that in light of comprehensibility in the drawing, the wire 34 will be omitted in Fig. 12, but individual electrodes 32 are electrically connected via the wire 34. In the present example, the density of the plurality of individual electrodes 32 in the corona discharge region 54 is higher than that of the plurality of individual electrodes 32 other than the corona discharge region 54. In the present example, the corona discharge region 54 means a region in the first grounded electrode 30 located immediately under the plurality of protruding portions 52 in the first corona discharge electrode 50.

The size of the smallest equilateral triangle 37 in which the plurality of individual electrodes 32 constitute in the corona discharge region 54 is smaller than that of the smallest equilateral triangle 36 in which the plurality of individual electrodes 32 constitute in a region other than the corona discharge region 54. The PMs are easier to be accumulated in the corona discharge region 54 as compared to another region. Here, when the plurality of individual electrodes 32 are densely disposed in the corona discharge region 54, the combustion of the PMs can be facilitated. The present example is different from the second embodiment in that point, but is the same as the second embodiment in other points.

Note that as a further modification example of the present example, the density of the plurality of individual electrodes 32 in the downstream of the PM containing gas 90 may be made higher than that of the plurality of individual electrodes 32 in the upstream of the PM containing gas 90. As the gas passes through the gas passing part 95, the number of the PMs charged by the corona discharge is increased. Therefore, when the density of the plurality of individual electrodes 32 in the downstream is made higher, the PMs can be combusted more efficiently.

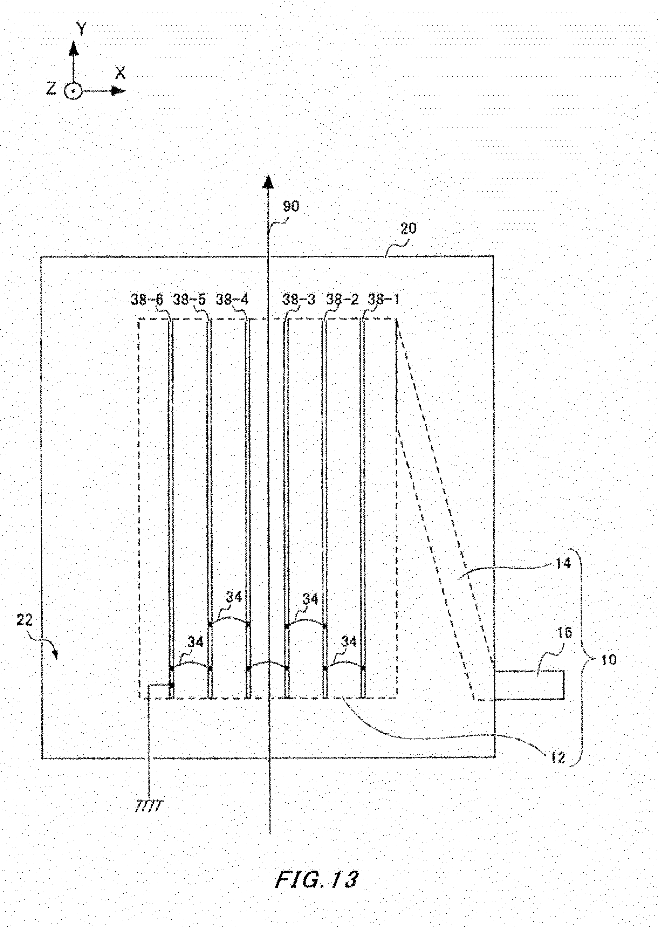

Fig. 13 is a drawing showing a disposition of a first grounded electrode 30 in a third embodiment. The first grounded electrode 30 of the present example also has a plurality of individual electrodes 32. The plurality of individual electrodes 32 in the present example include a plurality of parallel electrodes 38. The plurality of parallel electrodes 38 has a linear shape that extends in a direction parallel to the flow of the PM containing gas 90 introduced into the PM combustion apparatus 100. In the present example, since the extending direction of the parallel electrode 38 is parallel to the flow of the PM containing gas 90, the pressure loss in the gas passing part 95 can be reduced. The present example is different from the second embodiment in these points, but is the same as the second embodiment in other points. For example, the point in which the ground potential is applied to the plurality of parallel electrodes 38 with a wire 34 is the same. Therefore, the present example may be combined with the first embodiment, the second embodiment and these modification examples.

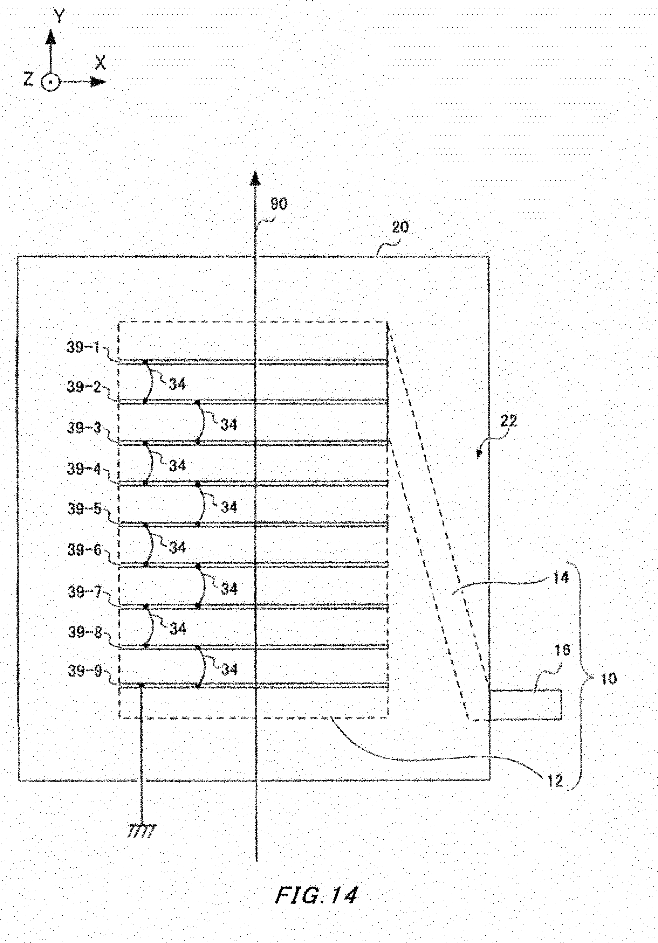

Fig. 14 is a drawing showing a first modification example of the third embodiment. The plurality of individual electrode 32 of the present example include a plurality of orthogonal electrodes 39. The plurality of orthogonal electrodes 39 has a linear shape extended in a direction orthogonal to the flow of the PM containing gas 90. The orthogonal electrode 39 of the present example is orthogonal to the flow of the PM containing gas 90. In a case where a PM concentration in the PM containing gas 90 is higher than that in the example of Fig. 13, and a pressure loss in the gas passing part 95 poses no problem, the present example is in particular effective.

Note that as a further modification example of the present example, the density of the plurality of orthogonal electrodes 39 in the downstream of the PM containing gas 90 may be made higher than that of the plurality of orthogonal electrodes 39 in the upstream of the PM containing gas 90. As the gas passes through the gas passing part 95, the number of the PMs charged by the corona discharge is increased. Therefore, when the density of the plurality of orthogonal electrodes 39 in the downstream is made higher, the PMs can be combusted more efficiently.

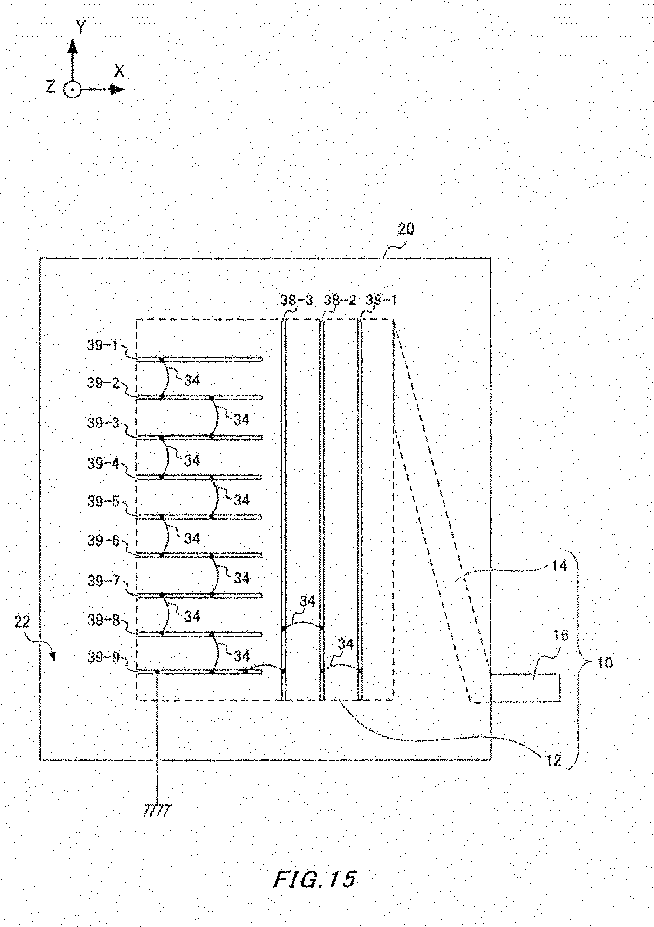

Fig. 15 is a drawing showing a second modification example of the third embodiment. The plurality of individual electrodes 32 in the present example include the plurality of parallel electrodes 38 and the plurality of orthogonal electrodes 39. In the present example, a half of the first grounded electrode 30 in the X direction has the plurality of parallel electrodes 38, and the other half has the plurality of orthogonal electrodes 39.

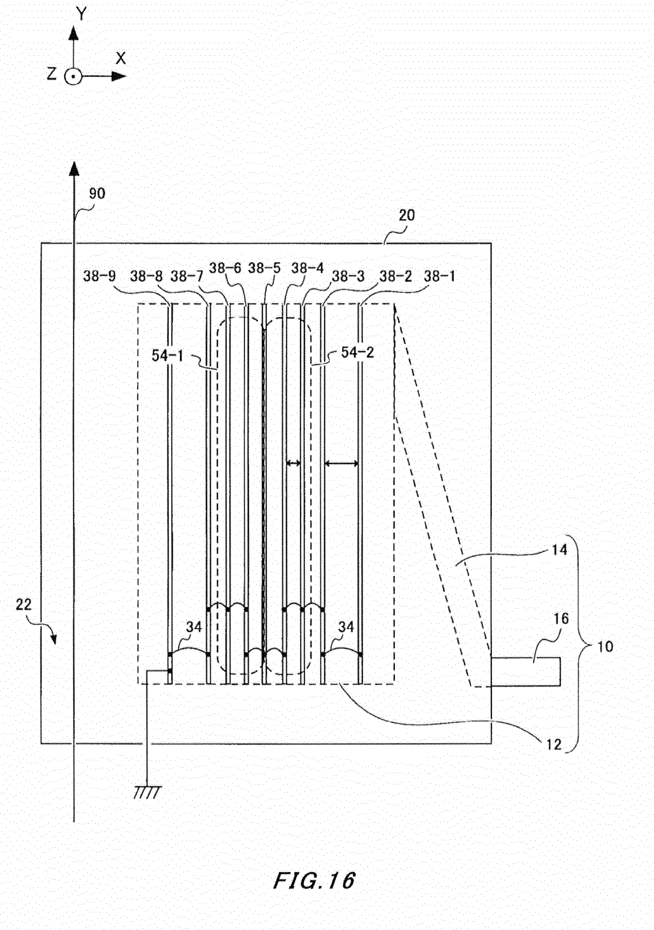

Fig. 16 is a drawing showing a third modification example of the third embodiment. In the present example, the density of the plurality of parallel electrodes 38 in the corona discharge region 54 is higher than that of the plurality of parallel electrodes 38 other than the corona discharge region 54. Also in the present example, as described above, when the plurality of parallel electrodes 38 are densely disposed in the corona discharge region 54, the combustion of the PMs can be facilitated.

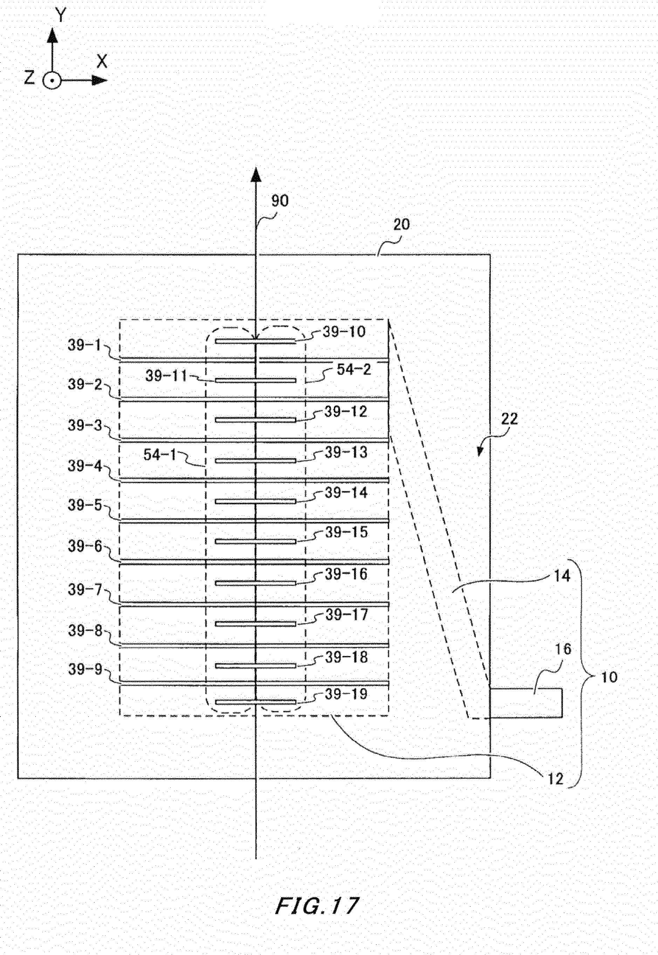

Fig. 17 is a drawing showing a fourth modification example of the third embodiment. Note that in light of comprehensibility in the drawing, the wire 34 will be omitted in Fig. 17, but individual electrodes 32 are electrically connected via the wire 34 to have the ground potential. In the present example, the density of the plurality of orthogonal electrodes 39 in the corona discharge region 54 is higher than that of the plurality of orthogonal electrodes 39 other than the corona discharge region 54. Also in the present example, as described above, when the plurality of orthogonal electrodes 39 are densely disposed in the corona discharge region 54, the combustion of the PMs can be facilitated.

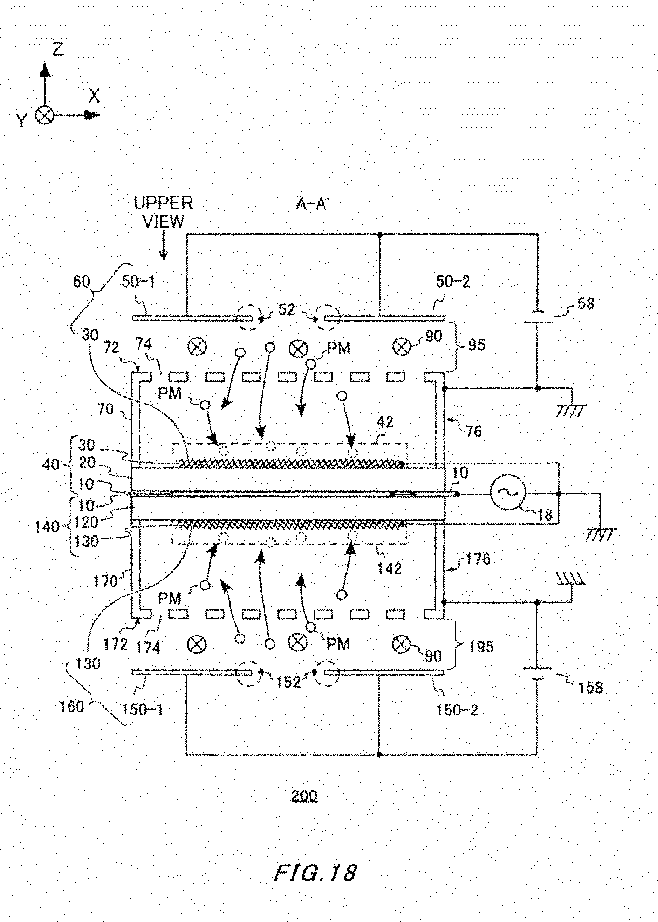

Fig. 18 is a drawing showing a cross-section A - A' of a PM combustion apparatus 200 in a fourth embodiment. The first embodiment and its whole modification examples may be applied to the present example. The PM combustion apparatus 200 of the present example further comprises the second dielectric material 120, the second grounded electrode 130, the second corona discharge electrode 150, the DC power supply 158 and the second collection box 170. The PM combustion apparatus 200 has a gas passing part 195 between the second corona discharge electrode 150 and the lower surface 172 of the second collection box 170.

The function of the second collection box 170 is the same as that of the first collection box 70. The second collection box 170 is disposed under the second dielectric material 120 such that the first collection box 70 is turned upside down. The second collection box 170 have the lower surface 172 and four side surfaces 176 similar to those in the first collection box 70. The lower surface 172 of the second collection box 170 has a plurality of openings 174.

The first creeping corona discharge electrode 10, the second dielectric 120 and the second grounded electrode 130 constitute the second combustion unit 140. The second dielectric 120 is disposed on the lower surface side of the first creeping corona discharge electrode 10. The second dielectric 120 of the present example is located under the first creeping corona discharge electrode 10 to be in contact with the first creeping corona discharge electrode 10. The second grounded electrode 130 is disposed on the lower surface side of the second dielectric 120. The second grounded electrode 130 has the ground potential. The function of the second combustion unit 140 is the same as that of the first combustion unit 40. The creeping corona discharge region 142 is formed in the vicinity of the lower surface of the second dielectric 120. The first creeping corona discharge electrode 10 is common to the second combustion unit 140 and the first combustion unit 40. In this way, the creeping corona discharge is generated between the first creeping corona discharge electrode 10 and each of the first grounded electrode 30 and the second grounded electrode 130. In the present example, when the second combustion unit 140 is overlapped under the first combustion unit 40, a combustion space of the PM containing gas 90 can be enlarged as compared to the first embodiment.

Note that if the first grounded electrode 30 is sandwiched between the first dielectric material 20 and the second dielectric 120, the first creeping corona discharge electrode 10 is exposed to the outside of the first dielectric material 20 and the second dielectric 120. In this case, since a distance between the first creeping corona discharge electrode 10 and the first collection box 70 at the ground potential needs to be sufficiently set so as to ensure a withstand voltage, the size of the PM combustion apparatus 200 becomes larger. On the other hand, in the present example, the first creeping corona discharge electrode 10 to be applied by a high voltage is sandwiched between the first dielectric material 20 and the second dielectric 120. Accordingly, the size of the PM combustion apparatus 200 can be reduced as compared to the case where the first grounded electrode 30 is sandwiched between the first dielectric material 20 and the second dielectric 120.

The second corona discharge electrode 150 and the second grounded electrode 130 constitute a second dust collection unit 160. The second corona discharge electrode 150 has a plurality of protruding portions 152. The function of the second dust collection unit 160 is the same as that of the first dust collection unit 60. The second grounded electrode 130 is common in the second dust collection unit 160 and the second combustion unit 140. In the present example, when the second dust collection unit 160 in addition to the first dust collection unit 60 is overlapped in the Z direction, a dust collection space of the PM containing gas 90 can be enlarged as compared to that in the first embodiment. Note that the present example is an example of a configuration in two stages in which the first combustion unit 40 and the second combustion unit 140, as well as the first dust collection unit 60 and the second dust collection unit 160, are overlapped with each other in the Z direction, but may be provided with a configuration in three or more stages. Note that the first combustion unit 40 and the second combustion unit 140, as well as the first dust collection unit 60 and the second dust collection unit 160, may be overlapped with each other in two or more stages in the X direction, and may be overlapped with each other in two or more stages in the Y direction.

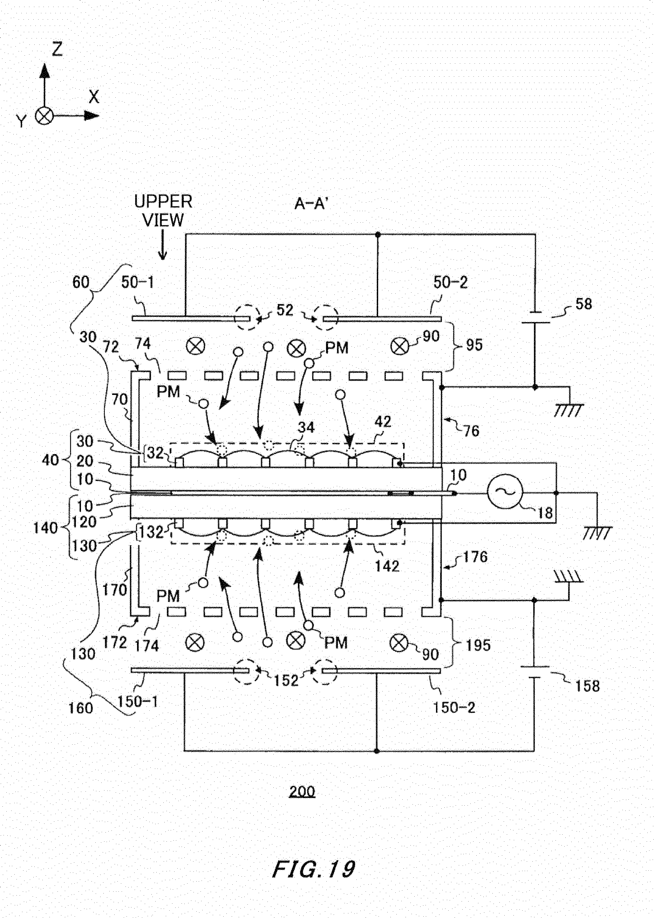

Fig. 19 is a drawing showing a cross-section A-A' of a PM combustion apparatus 200 in a fifth embodiment. The second embodiment, the third embodiment, the fourth embodiment and these whole modification examples may be applied to the present example. Similarly to the fourth embodiment, the combustion space and the dust collection space of the PM containing gas 90 can be enlarged as compared to those in the second embodiment and the third embodiment. In the present example, the second grounded electrode 130 has a plurality of individual electrodes 132.

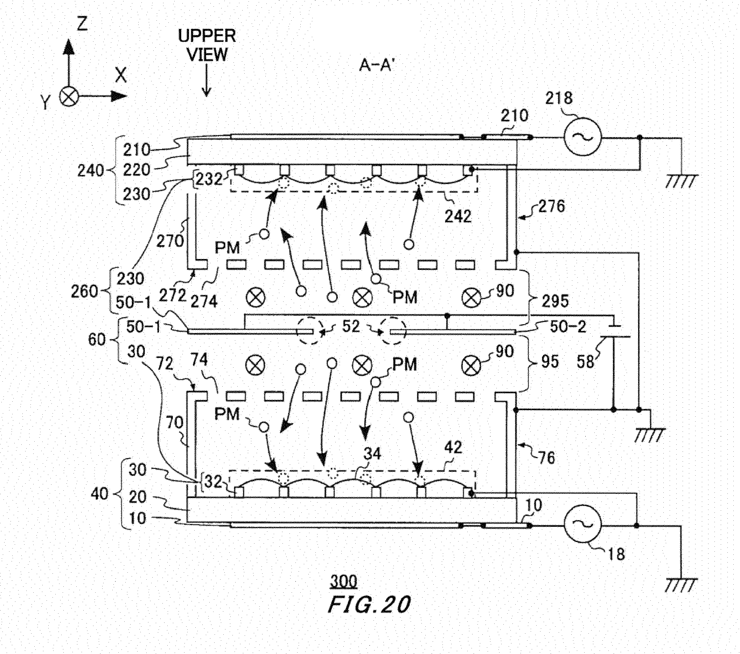

Fig. 20 is a drawing showing a cross-section A-A' of a PM combustion apparatus 300 in a sixth embodiment. The present example is different from the fifth embodiment in having the third combustion unit 240 and the third dust collection unit 260, in place of the second combustion unit 140 and the second dust collection unit 160. Note that the first grounded electrode 30 and the third grounded electrode 230 may be provided as the mesh shape described in the first embodiment, not having the individual electrodes 32 and individual electrodes 232. Therefore, the first embodiment, the second embodiment, the third embodiment and these modification examples may also be applied to the present example.

The third combustion unit 240 of the present example has a second creeping corona discharge electrode 210, a third dielectric material 220 and a third grounded electrode 230. The third dielectric material 220 of the present example is disposed above the first corona discharge electrode 50 to be spaced. The second creeping corona discharge electrode 210 of the present example is disposed on the upper surface side of the third dielectric material 220, and the third grounded electrode 230 is disposed on the lower surface side of the third dielectric material 220. The creeping corona discharge is generated between the second creeping corona discharge electrode 210 and the third grounded electrode 230. In the present example, the creeping corona discharge region 242 is formed in the vicinity of the lower surface of the third dielectric material 220. An AC power supply 218 applies an AC voltage to the second creeping corona discharge electrode 210. Note that the AC power supply 18 and the AC power supply 218 may be collectively provided as one AC power supply. The third grounded electrode 230 has the ground potential.

The third dust collection unit 260 of the present example has the first corona discharge electrode 50 and the third grounded electrode 230. In the present example, the first dust collection unit 60 and the third dust collection unit 260 share the first corona discharge electrode 50. In the present example, the corona discharge is generated between the first corona discharge electrode 50 and each of the first grounded electrode 30 and the third grounded electrode 230. In the present example, the second creeping corona discharge electrode 210 is located on the uppermost surface of the PM combustion apparatus 300, and the first creeping corona discharge electrode 10 is located on the lowermost surface of the PM combustion apparatus 300.

Also, the PM combustion apparatus 300 has a third collection box 270 between the first corona discharge electrode 50 and the third dielectric material 220. The function of the third collection box 270 is the same as that of the first collection box 70 and the second collection box 170. The third collection box 270 has a lower surface 272, openings 274 provided in the lower surface 272 and side surfaces 276. The PM combustion apparatus 300 has a gas passing part 295 between the first corona discharge electrode 50 and the lower surface 272 of the third collection box 270.

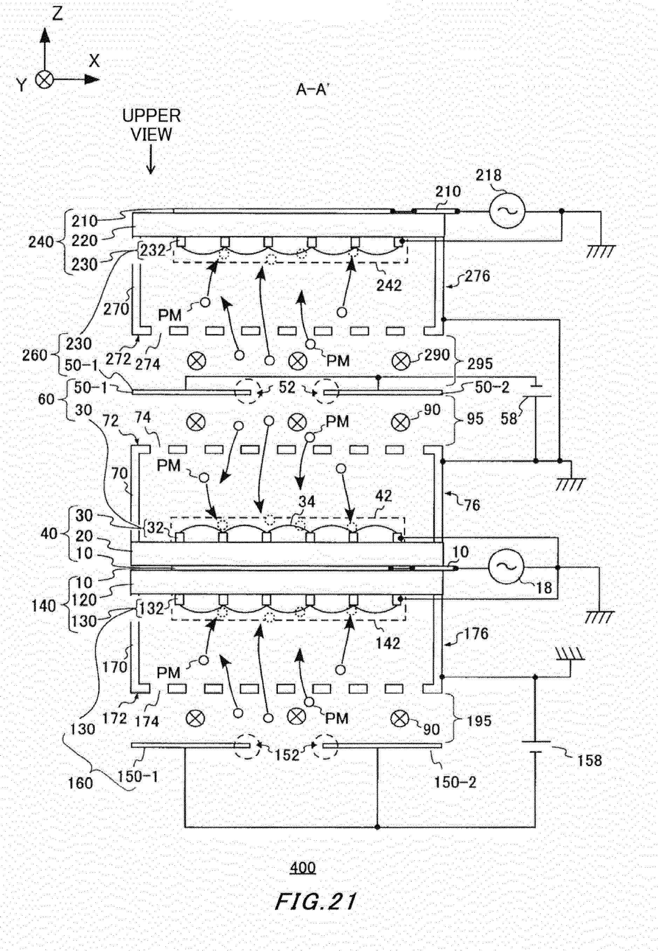

Fig. 21 is a drawing showing a cross-section A-A' of a PM combustion apparatus 400 in a seventh embodiment. The present example is an example that adds the second combustion unit 140 and the second dust collection unit 160 to the sixth embodiment. Note that the first grounded electrode 30, the second grounded electrode 130 and the third grounded electrode 230 may be provided as the mesh shape described in the first embodiment, not the plurality of individual electrodes described in the second embodiment. Therefore, the first embodiment, the second embodiment, the third embodiment and these modification examples may also be applied to the present example.

In the present example, the first dust collection unit 60 and the third dust collection unit 260 share the first corona discharge electrode 50. Also, the first combustion unit 40 and the second combustion unit 140 share the first creeping corona discharge electrode 10. In the present example, as for a set of the combustion unit and the dust collection unit, three sets thereof are adjacently disposed in a direction opposite to each other in the Z direction. In this way, one set adjacent to each other can share the creeping corona discharge electrode or the corona discharge electrode. Therefore, the number of components used in the PM combustion apparatus 400 can be reduced, and one set of the combustion unit and the dust collection unit can be disposed more in a limited space. Additionally, as for the set of the combustion unit and the dust collection unit, three sets thereof may be adjacently disposed in a direction opposite to each other in the X direction, and three sets thereof may be adjacently disposed in a direction opposite to each other in the Y direction.

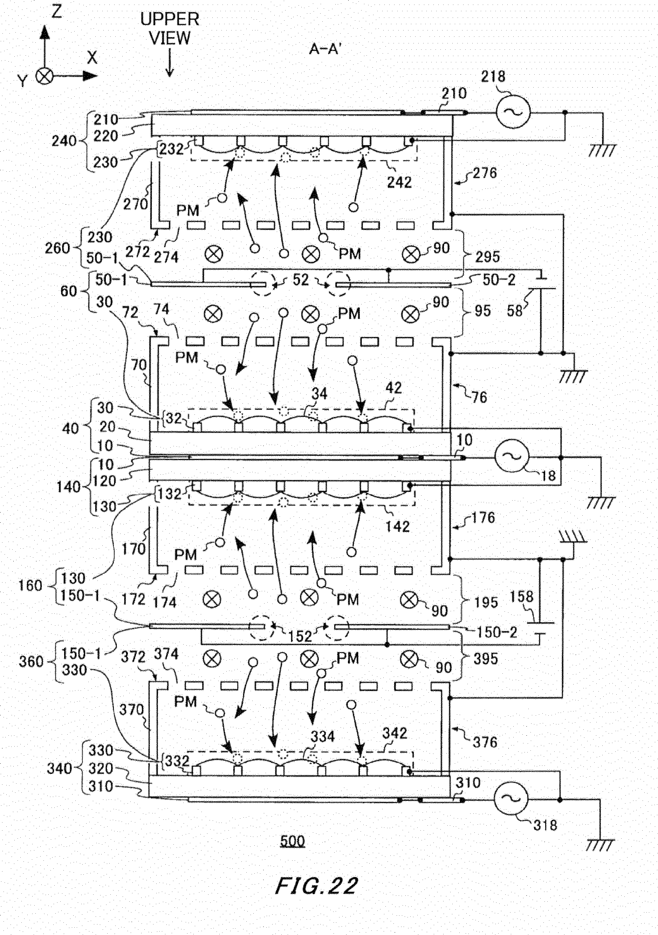

Fig. 22 is a drawing showing a cross-section A-A' of a PM combustion apparatus 500 in an eighth embodiment. The present example is different from the seventh embodiment in having further the fourth combustion unit 340 and the fourth dust collection unit 360. Note that the first grounded electrode 30, the second grounded electrode 130, the third grounded electrode 230 and the fourth grounded electrode 330 may be provided as the mesh shape described in the first embodiment, not having the individual electrodes 32, the individual electrodes 132, the individual electrodes 232 and the individual electrodes 332. Therefore, the first embodiment, the second embodiment, the third embodiment and these modification examples may also be applied to the present example.

The fourth combustion unit 340 of the present example has a third creeping corona discharge electrode 310, a fourth dielectric material 320 and a fourth grounded electrode 330. The fourth dielectric material 320 of the present example is disposed below the second corona discharge electrode 150 to be spaced. The third creeping corona discharge electrode 310 of the present example is disposed on the lower surface side of the fourth dielectric material 320, and the fourth grounded electrode 330 is disposed on the upper surface side of the fourth dielectric material 320. The creeping corona discharge is generated between the third creeping corona discharge electrode 310 and the fourth grounded electrode 330. In the present example, a creeping corona discharge region 342 is formed in the vicinity of the upper surface of the fourth dielectric material 320. An AC power supply 318 applies the AC voltage to the third creeping corona discharge electrode 310. Note that the AC power supply 18, the AC power supply 218 and the AC power supply 318 may be collectively provided as one AC power supply. The fourth grounded electrode 330 has the ground potential.

The fourth dust collection unit 360 of the present example has the second corona discharge electrode 150 and the fourth grounded electrode 330. In the present example, the second dust collection unit 160 and the fourth dust collection unit 360 share the second corona discharge electrode 150. In the present example, the corona discharge is generated between the second corona discharge electrode 150, and the second grounded electrode 130 and the fourth grounded electrode 330. In the present example, the second creeping corona discharge electrode 210 is located on the uppermost surface of the PM combustion apparatus 500, and the third creeping corona discharge electrode 310 is located on the lowermost surface of the PM combustion apparatus 500.

Also in the present example, since the creeping corona discharge electrode or the corona discharge electrode can be shared, the number of components used in the PM combustion apparatus 500 can be reduced, and one set of the combustion unit and the dust collection unit can be disposed more in a limited space. Note that in the present example, the set of the combustion unit and the dust collection unit may be provided by three sets thereof as the third combustion unit 240 and the third dust collection unit 260 are omitted. Also, the set of the combustion unit and the dust collection unit may be provided in another example by five sets or more thereof. For example, when the PM combustion apparatus 500 is provided in a space of 1 m × 1 m × 1 m (= 1 m³), the set of the combustion unit and the dust collection unit are stacked by ten sets thereof in the Z direction. Note that the set of the combustion unit and the dust collection unit may be stacked by ten sets thereof in the X direction and may be stacked by ten sets thereof in the Y direction.

Also, the PM combustion apparatus 500 has the fourth collection box 370 between the second corona discharge electrode 150 and the fourth dielectric material 320. The function of the fourth collection box 370 is the same as that of the first collection box 70, the second collection box 170 and the third collection box 270. The fourth collection box 370 has the upper surface 372, openings 374 provided on the upper surface 372 and side surfaces 376. The PM combustion apparatus 500 has a gas passing part 395 between the second corona discharge electrode 150 and the upper surface 372 of the fourth collection box 370.

While the embodiments of the present invention have been described, the technical scope of the invention is not limited to the foregoing embodiments but it is defined by the appended claims. It is apparent to persons skilled in the art that various alterations and improvements can be added to the foregoing embodiments. The embodiments added with such alterations or improvements can be included in the technical scope of the invention provided that they are covered by the appended claims.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

Numeral 10 ... first creeping corona discharge electrode, 12 ... flat surface region, 13 ... second side, 14 ... extension region, 16 ... extraction region, 18 ... AC power supply, 20 ... first dielectric material, 22 ... upper surface, 23 ... first side, 25 ... first direction, 28 ... lower surface, 30 ... first grounded electrode, 32 ... individual electrode, 34 ... wire, 36 ... equilateral triangle, 37 ... equilateral triangle, 38 ... parallel electrode, 39 ... orthogonal electrode, 40 ... first combustion unit, 42 ... creeping corona discharge region, 50 ... first corona discharge electrode, 52 ... protruding portion, 54 ... corona discharge region, 58 ... DC power supply, 60 ... first dust collection unit, 62 ... fixing portion, 64 ... fixing portion, 70 ... first collection box, 72 ... upper surface, 74 ... opening, 76 ... side surface, 80 ... hammer, 90 ... PM containing gas, 95 ... gas passing part, 100 ... PM combustion apparatus, 120 ... second dielectric material, 130 ... second grounded electrode, 132 ... individual electrode, 140 ... second combustion unit, 142 ... creeping corona discharge region, 150 ... second corona discharge electrode, 152 ... protruding portion, 158 ... DC power supply, 160 ... second dust collection unit, 170 ... second collection box, 172 ... lower surface, 174 ... opening, 176 ... side surface, 195 ... gas passing part, 200 ... PM combustion apparatus, 210 ... second creeping corona discharge electrode, 218 ... AC power supply, 220 ... third dielectric material, 230 ... third grounded electrode, 232 ... individual electrode, 240 ... third combustion unit, 242 ... creeping corona discharge region, 260 ... third dust collection unit, 270 ... third collection box, 272 ... lower surface, 274 ... opening, 276 ... side surface, 295 ... gas passing part, 300 ... PM combustion apparatus, 310 ... third creeping corona discharge electrode, 318 ... AC power supply, 320 ... fourth dielectric material, 330 ... fourth grounded electrode, 332 ... individual electrode, 340 ... fourth combustion unit, 342 ... creeping corona discharge region, 360 ... fourth dust collection unit, 370 ... fourth collection box, 372 ... upper surface, 374 ... opening, 376 ... side surface, 395 ... gas passing part, 400 ... PM combustion apparatus, 500 ... PM combustion apparatus

## Claims

1. A particulate matter combustion (100) apparatus comprising:
a dust collection unit (60) that charges a particulate matter in a particulate matter containing gas by a first discharge mechanism (50) to collect the particulate matter; and
a combustion unit (40) that reacts an active oxygen generated by a second discharge mechanism, different from the first discharge mechanism, with the particulate matter collected,
wherein the second discharge mechanism is a creeping corona discharge mechanism, the combustion unit includes:
a first dielectric material (20);
a first creeping corona discharge electrode (10) disposed on a lower surface side of the first dielectric material (20) to be applied by an AC voltage;
a first grounded electrode (30) disposed on an upper surface side of the first dielectric material (20) and having a ground potential, and wherein
the first discharge mechanism is a corona discharge mechanism, and the dust collection unit includes:
the first grounded electrode (30); and
a first corona discharge electrode (50) provided above the first grounded (30) electrode to be spaced;
wherein the first creeping corona discharge electrode (10) includes a flat surface region (12) and
wherein in a case where the first dielectric material (20) is seen from a top view, a first side of the first dielectric material (20) is protruded at a more outer side than a second side (13) of the flat surface region (12) of the first creeping corona discharge electrode (10) closest to the first side;
**characterized in that** the first creeping corona discharge electrode (10) further includes:
an extension region (14) electrically connected to the flat surface region (12), and extending outward from the second side (13) of the flat surface region (12) in a direction different from a first direction that connects the first side (23) of the first dielectric material (20) to the second side (13) of the flat surface region (12) at a shortest distance in the top view; and
an extraction region (16) electrically connected to the extension region (14), and protruding at a more outer side than the first side (23) of the first dielectric material (20) in the top view, wherein the extraction region (16) is configured so as to be connected to an AC power supply (18).

2. The particulate matter combustion apparatus according to Claim 1, wherein the direction extended by the extension region (14) forms an acute angle with the second side.

3. The particulate matter combustion apparatus according to any one of Claims 1 or 2, wherein the first grounded electrode (30) has a mesh configuration, and the apparatus further including a fixing portion (62) that fixes partially the first grounded electrode (30) to the first dielectric material (20).

4. The particulate matter combustion apparatus according to any one of Claims 1 to 3, further including a first collection box (70) disposed on the upper surface side of the first dielectric material (20), and having a plurality of openings in the upper surface opposed to the first dielectric material (20).

5. The particulate matter combustion apparatus according to Claim 1, wherein the first grounded electrode (30) includes a plurality of individual electrodes that are provided to be spaced from each other, and electrically connected to each other with a wire.

6. The particulate matter combustion apparatus according to Claim 5, wherein the plurality of individual electrodes (32, 132, 232, 332) are respectively disposed at vertex positions of equilateral triangles having a same size.

7. The particulate matter combustion apparatus according to Claim 5 or 6, further having a first collection box (70) that is disposed on the upper surface side of the first dielectric material (20) and has a plurality of openings in an upper surface opposed to the first dielectric material (20).

8. The particulate matter combustion apparatus according to Claim 5, wherein the plurality of individual electrodes (32, 132, 232, 332) has any of a plurality of parallel electrodes in a linear shape that extends in a direction parallel to a flow of the particulate matter containing gas introduced into the particulate matter combustion apparatus, and a plurality of orthogonal electrodes in a linear shape that extends in a direction orthogonal to the flow of the particulate matter containing gas.

9. The particulate matter combustion apparatus according to Claim 8, wherein the plurality of individual electrodes (32, 132, 232, 332) includes the plurality of parallel electrodes and the plurality of orthogonal electrodes.

10. The particulate matter combustion apparatus according to any one of Claims 5 to 9, wherein the first corona discharge electrode (50) has a plurality of protruding portions, wherein
a density of the plurality of individual electrodes (32, 132, 232, 332) in a corona discharge region located immediately under the plurality of protruding portions is higher than a density of the plurality of individual electrodes (32, 132, 232, 332) in other than the corona discharge region.

11. The particulate matter combustion apparatus according to any one of Claims 1 to 10, wherein a temperature of the first dielectric material is 300 degrees C or lower in a case where the AC voltage is applied to the first creeping corona discharge electrode (10).

12. The particulate matter combustion apparatus according to any one of Claims 1 to 11, further including:
a second dielectric material (120) disposed on a lower surface side of the first creeping corona discharge electrode (10);
a second grounded electrode (130) disposed on a lower surface side of the second dielectric material (120) and having the ground potential; and
a second corona discharge electrode (150) provided below the second grounded electrode (130) to be spaced.

13. The particulate matter combustion apparatus according to any one of Claims 1 to 12, further including:
a third dielectric material (220) disposed above the first corona discharge electrode (50) to be spaced;
a second creeping corona discharge electrode (210) disposed on an upper surface side of the third dielectric material (220) to be applied by the AC voltage; and
a third grounded electrode (230) disposed on a lower surface side of the third dielectric material (220) and having the ground potential, wherein the corona discharge is generated between the first corona discharge electrode (50) and each of the first grounded electrode (30) and the third grounded electrode (230).

14. The particulate matter combustion apparatus according to Claim 12, further having:
a third dielectric material (220) disposed above the first corona discharge electrode (50) to be spaced;
a second creeping corona discharge electrode (210) disposed on an upper surface side of the third dielectric material (220) to be applied by the AC voltage;
a third grounded electrode (230) disposed on a lower surface side of the third dielectric material (220) and having the ground potential,
a fourth dielectric material (320) disposed below the second corona discharge electrode (150) to be spaced;
a third creeping corona discharge electrode (310) disposed on a lower surface side of the fourth dielectric material (320) to be applied by the AC voltage; and
a fourth grounded electrode (330) disposed on an upper surface side of the fourth dielectric material (320) and having the ground potential, wherein
the corona discharge is generated between the first corona discharge electrode (50) and each of the first grounded electrode (30) and the third grounded electrode (230),
the corona discharge is generated between the second corona discharge electrode (150) and each of the second grounded electrode (130) and the fourth grounded electrode (330),
the creeping corona discharge is generated between the first creeping corona discharge electrode (10) and each of the first grounded electrode (30) and the second grounded electrode (130),
the creeping corona discharge is generated between the second creeping corona discharge electrode (210) and the third grounded electrode (230), and
the creeping corona discharge is generated between the third creeping corona discharge electrode (310) and the fourth grounded electrode (330).

## Patentansprüche

1. Feststoffpartikelverbrennungsvorrichtung (100), umfassend:
eine Staubsammeleinheit (60), die Feststoffpartikel in einem feststoffpartikelhaltigen Gas durch einen ersten Entlademechanismus (50) auflädt, um die Feststoffpartikel zu sammeln; und
eine Verbrennungseinheit (40), die einen aktiven Sauerstoff, der durch einen zweiten Entlademechanismus erzeugt wird, der sich von dem ersten Entlademechanismus unterscheidet, mit den gesammelten Feststoffpartikeln reagieren lässt,
wobei der zweite Entlademechanismus ein schleichender Koronaentladungsmechanismus ist und die Verbrennungseinheit umfasst:
ein erstes Dielektrikum (20);
eine erste schleichende Koronaentladungselektrode (10), die auf einer unteren Flächenseite des ersten Dielektrikums (20) angeordnet ist, an das eine Wechselspannung anzulegen ist;
eine erste geerdete Elektrode (30), die auf einer oberen Flächenseite des ersten Dielektrikums (20) angeordnet ist und ein Massepotenzial aufweist, und wobei
der erste Entladungsmechanismus ein Koronaentladungsmechanismus ist, und die Staubsammeleinheit umfasst:
die erste geerdete Elektrode (30) und
eine erste Koronaentladungselektrode (50), die über der ersten geerdeten Elektrode (30) vorgesehen ist, sodass sie davon beabstandet ist;
wobei die erste schleichende Koronaentladungselektrode (10) eine flache Flächenregion (12) umfasst, und
wobei in einem Fall, in dem das erste Dielektrikum (20) von einer Draufsicht angesehen wird, eine erste Seite des ersten Dielektrikums (20) an einer weiter außen befindlichen Seite vorsteht als eine zweite Seite (13) der flachen Flächenregion (12) der ersten schleichenden Koronaentladungselektrode (10), die der ersten Seite am nächsten ist;
**dadurch gekennzeichnet, dass** die erste schleichende Koronaentladungselektrode (10) ferner umfasst:
eine Erweiterungsregion (14), die mit der flachen Flächenregion (12) elektrisch verbunden ist und sich von der zweiten Seite (13) der flachen Flächenregion (12) in einer Richtung nach außen erstreckt, die sich von einer ersten Richtung unterscheidet, welche die erste Seite (23) des ersten Dielektrikums (20) mit der zweiten Seite (13) der flachen Flächenregion (12) in der Draufsicht in einer kürzesten Entfernung verbindet; und
eine Extraktionsregion (16), die mit der Erweiterungsregion (14) elektrisch verbunden ist und in der Draufsicht an einer weiter außen befindlichen Seite als die erste Seite (23) des ersten Dielektrikums (20) vorsteht, wobei die Extraktionsregion (16) derart konfiguriert ist, dass sie mit einer Wechselstromversorgung (18) verbunden ist.

2. Feststoffpartikelverbrennungsvorrichtung nach Anspruch 1, wobei die Richtung, in der sich die Erweiterungsregion (14) erstreckt, einen spitzen Winkel mit der zweiten Seite bildet.

3. Feststoffpartikelverbrennungsvorrichtung nach einem der Ansprüche 1 oder 2, wobei die erste geerdete Elektrode (30) eine Maschenkonfiguration aufweist und die Vorrichtung ferner einen Befestigungsabschnitt (62) umfasst, der die erste geerdete Elektrode (30) teilweise an dem ersten Dielektrikum (20) befestigt.

4. Feststoffpartikelverbrennungsvorrichtung nach einem der Ansprüche 1 bis 3, ferner umfassend einen ersten Sammelkasten (70), der auf der oberen Flächenseite des ersten Dielektrikums (20) angeordnet ist und mehrere Öffnungen in der dem ersten Dielektrikum (20) gegenüberliegenden oberen Fläche aufweist.

5. Feststoffpartikelverbrennungsvorrichtung nach Anspruch 1, wobei die erste geerdete Elektrode (30) mehrere Einzelelektroden umfasst, die derart vorgesehen sind, dass sie voneinander beabstandet und mit einem Draht elektrisch miteinander verbunden sind.

6. Feststoffpartikelverbrennungsvorrichtung nach Anspruch 5, wobei die mehreren Einzelelektroden (32, 132, 232, 332) entsprechend an Eckpunktpositionen von gleichseitigen Dreiecken gleicher Größe angeordnet sind.

7. Feststoffpartikelverbrennungsvorrichtung nach Anspruch 5 oder 6, ferner aufweisend einen ersten Sammelkasten (70), der auf der oberen Flächenseite des ersten Dielektrikums (20) angeordnet ist und mehrere Öffnungen in einer dem ersten Dielektrikum (20) gegenüberliegenden oberen Fläche aufweist.

8. Feststoffverbrennungsvorrichtung nach Anspruch 5, wobei die mehreren Einzelelektroden (32, 132, 232, 332) beliebige von mehreren parallelen Elektroden in einer linearen Form, die sich in einer Richtung parallel zu einer Strömung des in die Feststoffverbrennungsvorrichtung eingeleiteten feststoffpartikelhaltigen Gases erstreckt, und mehrere orthogonale Elektroden in einer linearen Form, die sich in einer Richtung orthogonal zu der Strömung des feststoffpartikelhaltigen Gases erstreckt, aufweisen.

9. Feststoffpartikelverbrennungsvorrichtung nach Anspruch 8, wobei die mehreren Einzelelektroden (32, 132, 232, 332) die mehreren parallelen Elektroden und die mehreren orthogonalen Elektroden umfassen.

10. Feststoffpartikelverbrennungsvorrichtung nach einem der Ansprüche 5 bis 9, wobei die erste Koronaentladungselektrode (50) mehrere vorstehende Abschnitte aufweist, wobei
eine Dichte der mehreren Einzelelektroden (32, 132, 232, 332) in einer Koronaentladungsregion, die sich unmittelbar unter den mehreren vorstehenden Abschnitten befindet, höher ist als eine Dichte der mehreren Einzelelektroden (32, 132, 232, 332) in anderen Regionen als der Koronaentladungsregion.

11. Feststoffpartikelverbrennungsvorrichtung nach einem der Ansprüche 1 bis 10, wobei die Temperatur des ersten Dielektrikums in einem Fall, in dem die Wechselspannung an die erste schleichende Koronaentladungselektrode (10) angelegt wird, 300 Grad C oder weniger beträgt.

12. Feststoffpartikelverbrennungsvorrichtung nach einem der Ansprüche 1 bis 11, ferner umfassend:
ein zweites Dielektrikum (120), das auf einer unteren Flächenseite der ersten schleichenden Koronaentladungselektrode (10) angeordnet ist;
eine zweite geerdete Elektrode (130), die auf einer unteren Flächenseite des zweiten Dielektrikums (120) angeordnet ist und das Massepotenzial aufweist; und
eine zweite Koronaentladungselektrode (150), die unter der zweiten zu beabstandenden geerdeten Elektrode (130) vorgesehen ist.

13. Feststoffpartikelverbrennungsvorrichtung nach einem der Ansprüche 1 bis 12, ferner umfassend:
ein drittes Dielektrikum (220), das über der ersten zu beabstandenden Koronaentladungselektrode (50) angeordnet ist;
eine zweite schleichende Koronaentladungselektrode (210), die auf einer Flächenseite des dritten Dielektrikums (220) angeordnet ist, an das die Wechselspannung anzulegen ist; und
eine dritte geerdete Elektrode (230), die auf einer unteren Flächenseite des dritten Dielektrikums (220) angeordnet ist und das Massepotenzial aufweist, wobei die Koronaentladung zwischen der ersten Koronaentladungselektrode (50) und jeder von der ersten geerdeten Elektrode (30) und der dritten geerdeten Elektrode (230) erzeugt wird.

14. Feststoffpartikelverbrennungsvorrichtung nach Anspruch 12, ferner aufweisend:
ein drittes Dielektrikum (220), das über der ersten zu beabstandenden Koronaentladungselektrode (50) angeordnet ist;
eine zweite schleichende Koronaentladungselektrode (210), die auf einer Flächenseite des dritten Dielektrikums (220) angeordnet ist, an das die Wechselspannung anzulegen ist;
eine dritte geerdete Elektrode (230), die auf einer unteren Flächenseite des dritten Dielektrikums (220) angeordnet ist und das Massepotenzial aufweist,
ein viertes Dielektrikum (320), das unter der zweiten zu beabstandenden Koronaentladungselektrode (150) angeordnet ist;
eine dritte schleichende Koronaentladungselektrode (310), die auf einer unteren Flächenseite des vierten Dielektrikums (320) angeordnet ist, an das die Wechselspannung anzulegen ist; und
eine vierte geerdete Elektrode (330), die auf einer oberen Flächenseite des vierten Dielektrikums (320) angeordnet ist und das Massepotenzial aufweist, wobei
die Koronaentladung zwischen der ersten Koronaentladungselektrode (50) und jeder von der ersten geerdeten Elektrode (30) und der dritten geerdeten Elektrode (230) erzeugt wird,
die Koronaentladung zwischen der zweiten Koronaentladungselektrode (150) und jeder von der zweiten geerdeten Elektrode (130) und der vierten geerdeten Elektrode (330) erzeugt wird,
die schleichende Koronaentladung zwischen der ersten schleichenden Koronaentladungselektrode (10) und jeder von der ersten geerdeten Elektrode (30) und der zweiten geerdeten Elektrode (130) erzeugt wird,
die schleichende Koronaentladung zwischen der zweiten schleichenden Koronaentladungselektrode (210) und der dritten geerdeten Elektrode (230) erzeugt wird und
die schleichende Koronaentladung zwischen der dritten schleichenden Koronaentladungselektrode (310) und der vierten geerdeten Elektrode (330) erzeugt wird.

## Revendications

1. Appareil de combustion de matière particulaire (100) comprenant:
une unité de collecte de poussière (60) qui charge une matière particulaire dans un gaz contenant de la matière particulaire grâce à un premier mécanisme de décharge (50) pour collecter la matière particulaire; et
une unité de combustion (40) qui fait réagir un oxygène actif généré par un deuxième mécanisme de décharge, différent du premier mécanisme de décharge, avec la matière particulaire collectée,
dans lequel le deuxième mécanisme de décharge est un mécanisme de décharge à effet corona rampante, l'unité de combustion comprenant:
un premier matériau diélectrique (20);
une première électrode de décharge à effet corona rampante (10) disposée sur un côté de surface inférieure du premier matériau diélectrique (20) pour qu'une tension CA lui soit appliquée;
une première électrode mise à la terre (30) disposée sur un côté de surface supérieure du premier matériau diélectrique (20) et ayant un potentiel de terre, et dans lequel
le premier mécanisme de décharge est un mécanisme de décharge à effet corona, et l'unité de collecte de poussière comprend:
la première électrode mise à la terre (30); et
une première électrode de décharge à effet corona (50) fournie au-dessus de la première électrode mise à la terre (30) pour être espacées;
dans lequel la première électrode de décharge à effet corona rampante (10) comprend une zone de surface plate (12), et
dans lequel, dans un cas où le premier matériau diélectrique (20) est vu de dessus, un premier côté du premier matériau diélectrique (20) fait saillie d'un côté plus à l'extérieur qu'un deuxième côté (13) de la zone de surface plate (12) de la première électrode de décharge à effet corona rampante (10) la plus proche du premier côté;
**caractérisé en ce que** la première électrode de décharge à effet corona rampante (10) comprend en outre:
une zone d'extension (14) connectée électriquement à la zone de surface plate (12), et s'étendant vers l'extérieur à partir du deuxième côté (13) de la zone de surface plate (12) dans une direction différente d'une première direction qui connecte le premier côté (23) du matériau diélectrique (20) au deuxième côté (13) de la zone de surface plate (12) à une distance la plus courte dans la vue de dessus; et
une zone d'extraction (16) connectée électriquement à la zone d'extension (14), et faisant saillie d'un côté plus à l'extérieur que le premier côté (23) du premier matériau diélectrique (20) dans la vue de dessus, dans lequel la zone d'extraction (16) est configurée de manière à être connectée à une alimentation en courant CA (18).

2. Appareil de combustion de matière particulaire selon la revendication 1, dans lequel la direction étendue de la zone d'extension (14) forme un angle aigu avec le deuxième côté.

3. Appareil de combustion de matière particulaire selon l'une quelconque des revendications 1 ou 2, dans lequel la première électrode mise à la terre (30) a une configuration maillée, et l'appareil comprenant en outre une partie de fixation (62) qui fixe partiellement la première électrode mise à la terre (30) au premier matériau diélectrique (20).

4. Appareil de combustion de matière particulaire selon l'une quelconque des revendications 1 à 3, comprenant en outre une première boîte de collecte (70) disposée sur le côté de surface supérieure du premier matériau diélectrique (20), et ayant une pluralité d'ouvertures dans la surface supérieure opposée au premier matériau diélectrique (20).

5. Appareil de combustion de matière particulaire selon la revendication 1, dans lequel la première électrode mise à la terre (30) comprend une pluralité d'électrodes individuelles qui sont fournies pour être espacées les unes des autres et connectées électriquement les unes aux autres avec un fil.

6. Appareil de combustion de matière particulaire selon la revendication 5, dans lequel la pluralité des électrodes individuelles (32, 132, 232, 332) sont respectivement disposées dans des positions de sommet de triangles équilatéraux ayant une même taille.

7. Appareil de combustion de matière particulaire selon la revendication 5 ou 6, ayant en outre une première boîte de collecte (70) disposée sur le côté de surface supérieure du premier matériau diélectrique (20) et ayant une pluralité d'ouvertures dans une surface supérieure opposée au premier matériau diélectrique (20).

8. Appareil de combustion de matière particulaire selon la revendication 5, dans lequel la pluralité des électrodes individuelles (32, 132, 232, 332) a l'une quelconque parmi une pluralité d'électrodes parallèles en une forme linéaire qui s'étend dans une direction parallèle à un écoulement du gaz contenant la matière particulaire introduit dans l'appareil de combustion de matière particulaire et une pluralité d'électrodes orthogonales en une forme linéaire qui s'étend dans une direction orthogonale à l'écoulement du gaz contenant la matière particulaire.

9. Appareil de combustion de matière particulaire selon la revendication 8, dans lequel la pluralité des électrodes individuelles (32, 132, 232, 332) comprend la pluralité des électrodes parallèles et la pluralité des électrodes orthogonales.

10. Appareil de combustion de matière particulaire selon l'une quelconque des revendications 5 à 9, dans lequel la première électrode de décharge à effet corona (50) a une pluralité de parties saillantes, dans lequel
une densité de la pluralité des électrodes individuelles (32, 132, 232, 332) dans une zone de décharge à effet corona située immédiatement sous la pluralité des parties saillantes est supérieure à une densité de la pluralité des électrodes individuelles (32, 132, 232, 332) dans une zone autre que la zone de décharge à effet corona.

11. Appareil de combustion de matière particulaire selon l'une quelconque des revendications 1 à 10, dans lequel une température du premier matériau diélectrique est de 300 degrés C ou moins dans un cas où la tension CA est appliquée à la première électrode de décharge à effet corona rampante (10).

12. Appareil de combustion de matière particulaire selon l'une quelconque des revendications 1 à 11, comprenant en outre:
un deuxième matériau diélectrique (120) disposé sur un côté de surface inférieure de la première électrode de décharge à effet corona rampante (10);
une deuxième électrode mise à la terre (130) disposée sur un côté de surface inférieure du deuxième matériau diélectrique (120) et ayant le potentiel de terre; et
une deuxième électrode de décharge à effet corona (150) fournie sous la deuxième électrode mise à la terre (130) pour être espacées.

13. Appareil de combustion de matière particulaire selon l'une quelconque des revendications 1 à 12, comprenant en outre:
un troisième matériau diélectrique (220) disposé au-dessus de la première électrode de décharge à effet corona (50) pour être espacés;
une deuxième électrode de décharge à effet corona rampante (210) disposée sur un côté de surface supérieure du troisième matériau diélectrique (220) pour que la tension CA lui soit appliquée; et
une troisième électrode mise à la terre (230) disposée sur un côté de surface inférieure du troisième matériau diélectrique (220) et ayant le potentiel de terre, dans lequel la décharge à effet corona est générée entre la première électrode de décharge à effet corona (50) et chacune parmi la première électrode mise à la terre (30) et la troisième électrode mise à la terre (230).

14. Appareil de combustion de matière particulaire selon la revendication 12, ayant en outre:
un troisième matériau diélectrique (220) disposé au-dessus de la première électrode de décharge à effet corona (50) pour être espacés;
une deuxième électrode de décharge à effet corona rampante (210) disposée sur un côté de surface supérieure du troisième matériau diélectrique (220) pour que la tension CA lui soit appliquée;
une troisième électrode mise à la terre (230) disposée sur un côté de surface inférieure du troisième matériau diélectrique (220) et ayant le potentiel de terre,
un quatrième matériau diélectrique (320) disposé sous la deuxième électrode de décharge à effet corona (150) pour être espacés;
une troisième électrode de décharge à effet corona rampante (310) disposée sur un côté de surface inférieure du quatrième matériau diélectrique (320) pour que la tension CA lui soit appliquée; et
une quatrième électrode mise à la terre (330) disposée sur un côté de surface supérieure du quatrième matériau diélectrique (320) et ayant le potentiel de terre, dans lequel
la décharge à effet corona est générée entre la première électrode de décharge à effet corona (50) et chacune parmi la première électrode mise à la terre (30) et la troisième électrode mise à la terre (230),
la décharge à effet corona est générée entre la deuxième électrode de décharge à effet corona (150) et chacune parmi la deuxième électrode mise à la terre (130) et la quatrième électrode mise à la terre (330),
la décharge à effet corona rampante est générée entre la première électrode de décharge à effet corona rampante (10) et chacune parmi la première électrode mise à la terre (30) et la deuxième électrode mise à la terre (130),
la décharge à effet corona rampante est générée entre la deuxième électrode de décharge à effet corona rampante (210) et la troisième électrode mise à la terre (230), et
la décharge à effet corona rampante est générée entre la troisième électrode de décharge à effet corona rampante (310) et la quatrième électrode mise à la terre (330).
